# EUROPEAN PATENT SPECIFICATION

(11) **EP 0 645 977 B1**
(45) Date of publication and mention of the grant of the patent: **23.08.2000**
(21) Application number: 93913784.0
(22) Date of filing: 04.05.1993
(51) Int. Cl.: A47C 15/00, B60N 2/30

(54) **INTEGRATED CHILD SEAT MODULE**
INTEGRIERTE KINDERSITZEINHEIT
MODULE DE SIEGE D'ENFANT INTEGRE

(30) Priority: 13.05.1992 US 882610
(43) Date of publication of application: 05.04.1995
(73) Proprietor: DaimlerChrysler Corporation, Highland Park, Michigan 48288 (US); ATOMA INTERNATIONAL INC., Newmarket, Ontario L3Y 4X7 (CA)
(72) Inventor: CZAPSKI, Richard, J., Livonia, MI 48150 (US); D'SOUZA, Neville, G., Troy, MI 48083 (US); LLOYD, Rodney, L. 3787 Carrie Lane, Walled Lake, MI 48390 (US); DUKATZ, Matthew, E., Bloomfield Hills, MI 48304 (US); FURR, Steven, J., Canton, MI 48188 (US); KRESKY, Fred, C., Rochester Hills, MI 48307 (US); LAMBERT, Jeffrey, T., Northville, MI 48167 (US); POPA, George, S., Troy, MI 48098 (US); ZAROWITZ, Ronald, S., West Bloomfield, MI 48329 (US); CORKINS, M., Jeffry, Milford, MI 48380 (US)
(74) Representative: Laight, Martin Harvey
(86) International application number: PCT/US93/04046
(87) International publication number: WO 93/22954

(56) References cited:
- EP-A- 0 549 115
- GB-A- 2 023 415
- US-A- 4 040 664
- US-A- 4 681 367
- US-A- 4 685 741
- US-A- 4 756 573
- US-A- 4 880 277
- US-A- 4 900 086
- US-A- 4 900 087
- US-A- 4 943 112
- US-A- 4 986 600
- US-A- 5 039 169
- US-A- 5 106 158
- US-A- 5 135 285

## Description

This invention relates to vehicle seats and more particularly to vehicle seats integrated so as to provide an adult seat in an adult seat mode and a child's seat in a child seat mode.

The type of integrated vehicle seat herein contemplated is the type disclosed in the PCT International Publication WO 92/20549, published May 14, 1992, entitled "Integrated Child Seat for Vehicle". The vehicle seat disclosed in the PCT application is a three-mode seat for a motor vehicle cooperable with an adult seat belt assembly to provide three modes of operation including an adult seat mode, a large child booster seat mode, and a small child mode.

As was indicated in the specification of the PCT application, by providing for both a small child mode and a large child booster seat mode, the integrated seat was able to conveniently accommodate a fairly wide range of children's sizes, thus rendering the integrated seat more useful for a greater number of years and hence more useful to a greater number of family situations. An important feature of the subject matter of the PCT application is the provision of the large child booster seat mode. In this mode, the child seat module is deployed to accommodate the child and the adult seat belt assembly is used to provide restraint; whereas in the small child mode, restraint is provided by the child's seat belt assembly included as part of the child's seat module.

The exemplary embodiment of the three-mode seat, disclosed in publication WO 92/20549, is with respect to the bench seat of a van-type motor vehicle. In sedan-type motor vehicles, it may be desirable to integrate the back seat so as to provide the child seat mode alternative to the usual adult seat mode. Moreover, it may be desirable to integrate the back seat so that only one child is accommodated in the center of the rear seat. Under these circumstances, it may be difficult to provide sufficient restraint in a third large child booster seat mode simply by utilizing lap belt components. The requirement for restraint is included in United States Motor Vehicle safety Standard No. 213-80. Consequently, it becomes necessary to provide for simple convenient adjustability to child's seat belt assembly embodied in the child seat module to accommodate a full range of sizes.

While the patent literature contains proposals for integrated seats which provide child's seat belt adjustments for accommodating both a large child and a small child, to date there has been no widespread usage of such adjustable integrated arrangements.

One example from the patent literature is Leblanc et al. US-A-4,986,600. In the '600 patent, the adjustment is provided by a pair of cleats. Each cleat is comblike in construction including a plurality of tines formed with upturned flanges to prevent the looped ends of the shoulder straps from sliding off. The looped ends of the straps are attached to the tines at the level best suited to the size of the child so that, as the child grows, successively higher tines are used.

The patent literature also contains other disclosures such as those briefly depicted below.

Bailey et al. US-A-4,690,455 discloses an infant seat including a padded support plate with a thin outer cover serving as the back of a bench seat beneath an upper center panel, and which is pivotally lowered onto the usual bench seat, exposing a back support flap sewn to the padded support and a pair of flexible and resilient side flaps attached to the support plate.

British patent application GB-A-2,023,415 discloses a vehicle child seat arrangement wherein a child seat having a dish-shaped recess at the forward end thereof to accommodate an infants legs is pivotally lowered onto the vehicle seat from a walled recess the full height of the vehicle seat back, with shoulder restraint belts extending from the back wall of the recess, leg restraint belts extending from the child seat, and a crotch strap extending from adjacent the bottom of the dish-shaped recess, all connected by a central buckle. Another embodiment includes upper and lower portions integral with the bench seat back and interconnected by a hinge, wherein the upper portion slides downwardly, pivoting about the hinge to fold onto the lower portion once the latter has folded outwardly onto the bench seat.

Offenlegungsschrift DE-A-27 20 954 discloses an infant seat substantially in the vertical center of a vehicle seat back which is unlatched to pivot downwardly to a horizontal position spaced apart from the vehicle seat, with two shoulder belts and two side belts extending from the back, and a center crotch belt extending from the front of the infant seat, and all five belts joined at a front central connector.

Hassel Patent US-A-4,540,216 includes a child's seat integrally mounted in an automobile seat back and retained therein when closed by closure means, such as a zipper. When unzipped and opened, a cushion with its outer padding and cover pivots downwardly onto the automobile seat, pulling along with it by means of a center strap a U-shaped arm rest which is retained substantially parallel to the lowered cushion by suitable fixed retained means.

Vaidya Patent US-A-4,596,420 discloses a tubular frame within a vehicle seat back, from which oppositely disposed, vertically oriented head support panels are pivotally extended, a torso containment panel is telescopically extended, and a foot support panel is pivoted downward onto the vehicle seat, exposing a fixed molded child seat and back.

Mast et al. Patent US-A-2,584,481 discloses an infant's seat which opens from the uppermost portion of an automobile seat back by pivoting a child's seat downwardly to a position spaced above the automobile seat, and pivoting oppositely disposed arm rests downwardly to a position spaced above the child's seat, with suitable pins and grooves for controlling the pivotal movements of the seat and arm rests. -

Strahler Patent US-A-2,966,201 discloses an infant seat cradle structure encompassing the full height of an automobile seat back, which pivots downwardly onto the automobile seat to expose an elongated trough into which an infant may be confined by straps. When used for toddlers, a separate seat is mounted in and over the inner end of the trough, with belt straps extending from the sides of the recess remaining upon removal of the elongated trough.

Law Patent US-A-4,943,112 discloses upper and lower portions of a bench seat back, interconnected by a reinforcing panel, wherein the upper portion folds down about the reinforcing panel, onto the lower portion once the latter folds downwardly onto the bench seat in the manner of the above-referenced embodiment of the British Application GB-A-2,023,415.

The adjustability provided in the prior art arrangements to accommodate both the small child and the large child suffer from one or more disadvantages including difficulty in effecting the adjustment or, in those instances where adjustability is simplified as in the '600 patent, the arrangement in order to be effective would require strengthening such as to add undesirable weight and cost. There still exists a need in those situations where a three-mode integrated seat, such as disclosed in the WO 92/20549 publication, is not applicable to provide an integrated seat in which a range of child sizes is accommodated by child seat belt adjustment which can be simply and conveniently accomplished with a cost-effective arrangement.

In addition to the prior art set out above, certain displays were made in the USA of integrated child seats which included subject matter pertinent to the removable cushion pad assembly aspect of the present invention. It is believed that, before the priority date of the present application, displays were made of a vehicle seat integrated to selectively provide an adult seat in an adult seat mode and a child's seat in a child seat mode, said vehicle seat comprising a seat cushion assembly constructed and arranged to be mounted on a vehicle in a position to enable an adult occupant of the vehicle to sit thereon in an operative position, a seat back support assembly mounted with respect to said seat cushion assembly so to be disposed in an operative fixed relation therewith, side cushions carried by said seat back support assembly in positions spaced apart a distance sufficient to define a child receiving space between said side cushions of a size to enable a child to be disposed between said side cushions, a plurality of cushion assemblies mounted on said seat back support assembly including a movable cushion assembly constructed and arranged with respect to said seat back support assembly to be moved between (A) an adult mode position wherein said plurality of cushion assemblies including said movable cushion assembly are disposed within the space between the side cushions and provide therewith a cushioned adult back support for engaging the back of an adult seat occupant sitting on the seat cushion assembly, and (B) a child mode position wherein said movable cushion assembly extends from the space between the side cushions in overlying relation to the seat cushion assembly, and said plurality of cushion assemblies including said movable cushion assembly provide a cushioned child's seat extending from the bottom of the space in overlying relation to the seat cushion assembly, a cushioned child's seat back extending upwardly from said cushioned child's seat within the space between said side cushions, and a cushioned child's head support above the cushioned child's seat back, said movable cushion assembly including a frame structure constructed and arranged to extend generally forwardly from a lower portion of the seat back support assembly when said movable cushion assembly is in the child mode position thereof, a structural connection between said frame structure and said seat back support assembly constructed and arranged to enable said movable cushion assembly to be moved between said adult mode and child mode positions, said movable cushion assembly including cushioning material attached to said frame structure in a position to be disposed (A) generally beneath said frame structure when said movable cushion assembly is in said child mode position and (B) generally forwardly of said frame structure between said side cushions when said movable cushion assembly is in said adult mode position, said plurality of cushion assemblies including a removable cushion pad assembly having a seat section, one or more hook fastener sections on said movable cushion assembly and cooperating loop connections on said seat section, said one or more hook fastener sections and said cooperating loop connections being constructed and arranged to detachably retain said seat section of said removable cushion pad assembly with said movable cushion assembly so as to be moved therewith between a position generally between the seat back support assembly and the frame structure of said movable cushion assembly when said movable cushion assembly is in the adult mode position thereof and a position in generally overlying relation to the frame structure of said movable cushion assembly when said movable cushion assembly is in the child mode position thereof, and a child's seat belt assembly constructed and arranged to be operable when said movable seat assembly is in the child mode position thereof to be manually moved between (A) a restraint condition enabling a child in a sitting position on said cushioned child's seat to be restrained thereby and (B) a released condition enabling (a) entry of a child into a sitting position on said cushioned child's seat preparatory to restraint or (b) exit of a child from a sitting position on said cushioned child's seat after restraint, said child's seat belt assembly when in said restraint condition with respect to a child in a sitting position on said cushioned child's seat extending downwardly between the legs of the child to a restraint point provided by said frame structure and including a pair of shoulder belts extending from said seat back support assembly over the shoulders of a child in sitting position on said cushioned child's seat, the seat section of said removable cushion pad assembly constituting an upper layer of said cushioned child's seat when said movable cushion assembly is in the child mode position thereof and being constructed and arranged to allow said child's seat belt assembly to be moved into said restraint condition wherein the child's seat belt assembly extends downwardly between the legs of a child in a sitting position on the seat section of said removable cushion pad assembly to the restraint point provided by said frame structure, said removable cushion pad assembly being constructed of a first cloth material on an exterior side thereof defining the upper layer of the cushioned child's seat and being constructed of a second cloth material on an opposite side to said exterior side.

In accordance with the present invention such a vehicle seat is characterised in that said cooperating loop connections comprises the second cloth material itself said second cloth material having a pile-like outer surface extending substantially throughout said opposite side of said seat section providing loops detachably engageable by said one or more hook fastener sections.

There will now be described a number of constructions which either provide embodiments of the invention or which provide features which may be used in embodiments of the invention.

There may be provided a vehicle seat integrated to selectively provide an adult seat in an adult seat mode and a child's seat in a child seat mode capable of simple and convenient adjustment to selectively accommodate a relatively small child or a relatively large child. The vehicle seat comprises a seat cushion assembly for mounting on a vehicle in a position to enable an adult occupant of the vehicle to sit thereon in an operative position. A rigid seat back frame structure is mounted with respect to the seat cushion assembly in an operative fixed relation. Side cushions are carried by the seat back frame structure in positions to be engaged by opposite sides of the back of an adult seat occupant sitting on the seat cushion assembly in the operative position thereof. The side cushions are spaced apart a distance sufficient to define a child receiving space therebetween of a size to enable a child to be disposed therebetween. A rigid back panel is fixedly mounted on the seat back frame structure forwardly thereof within a rearward portion of the space between the side cushions. A cushion assembly is mounted on the back panel including movable cushion assemblies mounted for movement between (1) an adult mode position wherein the movable cushion assemblies are disposed within the space between the side cushions and provide adult back cushions for engaging the middle of the back of an adult seat occupant sitting on the seat cushion assembly in the operative position thereof, and (2) a child mode position wherein the movable cushion assemblies extend from the space between the side cushions and the cushion assembly provides a cushioned child's seat extending from the bottom of the space in overlying relation to the seat cushion assembly, a cushioned child's seat back extending upwardly from the cushioned child's seat within the space between the side cushions, and a cushioned child's head support above the cushioned child's seat back. A child's seat belt assembly is connected with the back panel including a pair of shoulder belts extending forwardly of the cushioned child's seat back for extension over the shoulders of a small child sitting on the cushioned child's seat. The cushioned child's seat provides a rigid anchor point for the child's seat belt assembly between the legs of a child sitting on the cushioned child's seat. Adjustment is provided for enabling the pair of shoulder belts of the child's seat belt assembly to be conveniently moved into a plurality of vertically spaced positions with respect to the child's seat back to selectively accommodate a relatively small child or a relatively large child by simply manually grasping the shoulder belts extending forwardly of the cushioned child's seat back and moving them selectively into one of the plurality of vertically spaced positions. The adjustment comprises two horizontally spaced and generally horizontally aligned pairs of vertically spaced belt receiving restraint slots formed in the rigid back panel. Each pair of restraint slots has a transfer slot extending from one of the restraint slots to the other of the restraint slots so as to define a cantilevered portion in the rigid back panel between the associated pair of restraint slots. A brace is connected between each cantilevered portion and the seat back frame structure for providing support from the seat back frame structure directly to each cantilevered portion while allowing the associated shoulder belt to be selectively moved within the associated transfer slot between the associated pair of slots.

Another arrangement provides an integrated vehicle seat of the type described which is particularly useful as the high back seat of a family sedan-type motor vehicle. In this arrangement a vehicle seat is inteqrated to selectively provide an adult seat in an adult seat mode and a child's seat in a child seat mode. The vehicle seat comprises a seat cushion assembly operable to be mounted in a position within the vehicle to enable an adult occupant of the vehicle to sit thereon in an operative position. A rigid seat back frame assembly is mounted within the vehicle with respect to the seat cushion assembly in an operative fixed relation. Side cushions are carried by the seat back frame means in positions to be engaged by opposite sides of the back of an adult seat occupant sitting on the seat cushion assembly in the operative position thereof. The side cushions are spaced apart a distance sufficient to define a child receiving space therebetween of a size to enable a child to be disposed therebetween. A cushion assembly is mounted on the seat back frame assembly including movable cushion assemblies mounted for movement between (1) an adult mode position wherein the movable cushion assemblies are disposed within the space between the side cushions and provide adult back cushions for engaging the middle of the back of an adult seat occupant sitting on the seat cushion assembly in the operative position thereof, and (2) a child mode position wherein the movable cushion assemblies extend from the space between the side cushions and the cushion assembly provides a cushioned child's seat extending from the bottom of the space in overlying relation to the seat cushion assembly, a cushioned child's seat back extending upwardly from the cushioned child's seat within the space between the side cushions, and a cushioned child's head support above the cushioned child's seat back. The movable cushion assemblies include a pair of movable cushion assemblies movable together between (1) the adult mode position wherein a lower one of the pair of movable cushion assemblies extends upwardly and has an upper one of the pair of movable cushion assemblies extending thereabove and (2) the child mode position wherein the lower movable cushion assembly extends forwardly and has the upper movable cushion assembly extending forwardly therefrom. The pair of movable cushion assemblies are interconnected for movement together and for limited articulating movement with respect to one another so as to accommodate different relative angular positions of abutment when in the adult mode and the child mode positions. A child's seat belt assembly is connected with the seat back frame assembly including a pair of shoulder belts extending forwardly of the cushioned child's seat back for extension over the shoulders of a small child sitting on the cushioned child's seat. The lower movable cushion assembly provides a rigid anchor point for the child's seat belt assembly between the legs of a child sitting on the cushioned child's seat.

Another arrangement provides a child's seat module for use with a seat cushion assembly a seat back assembly modified to accept the child's seat module which embodies therein the features heretofore discussed.

A general object of the invention is to provide an improved child restraint system which is integrated with a motor vehicle or aircraft seat and may be made in compliance with Motor Vehicle Safety Standards. This system is for a child weighing more than 20 pounds.

Another arrangement provides an improved child restraint system including a fold-down seat cushion and leg support interconnected by a flexible hinge, with a suitable safety harness.

A further arrangement provides such a an improved child restraint system wherein the cavity from which the seat cushion and leg support are removed serves as the back and side supports for the toddler.

Still another arrangement provides a module that can be installed in a motor vehicle or aircraft seat for permanent installation therein, giving the appearance of a full bench seat, without requiring an upward-folding or removable segment.

A still further arrangement provides an integrated child seat module for a vehicle seat including an interconnected fold-down seat cushion and leg support, with back and side supports provided by the recess from which the seat cushion and leg support are lowered, and a safety harness including either a three-point belt system with twin shoulder belts and a crotch belt, or a five-point belt system, wherein two additional belt extensions are adapted to being mounted over the thighs of the child.

Still another arrangement provides a child restraint system including a fold-down seat cushion and leg support, with provisions for removing the leg support if desired for a particular size child.

Embodiments of the invention will now be described with reference to the following drawings in which:-
Figure 1 is a perspective view of a vehicle seat and back embodying the inventive integrated child seat module in its stored position;
Figure 2 is a fragmentary perspective view of the seat with the inventive integrated child seat module opened up into its in-use configuration;
Figure 3 is an enlarged perspective and partially exploded view of the child seat module portion of Figure 2;
Figure 4 is an enlarged perspective view of a pad adapted to being mounted on the child seat module back panel and seat support pan of Figure 3;
Figure 5 is a perspective view of the child seat module and a five-point safety harness which may be used therewith;
Figure 6 is an exploded, perspective view of the child seat nodule support platform together with a portion of a five-point safety harness;
Figure 7 is a perspective view of the underside of the support pan of Figure 6;
Figure 8 is a fragmentary, exploded, perspective view of the child seat bottom portion;
Figure 9 is an enlarged cross-sectional view taken along the plane of the line 9-9 of Figure 5, and looking in the direction of the arrows;
Figure 10 is a side elevational view taken along the plane of the line 10-10 of Figure 5, and looking in the direction of the arrow, with a portion thereof in an opened-up condition;
Figure 11 is an enlarged cross-sectional view taken along the plane of the line 11-11 of Figure 10, and looking in the direction of the arrows;
Figure 12 is an enlarged cross-sectional view taken along the plane of the line 12-12 of Figure 2, and looking in the direction of the arrows;
Figure 13 is a fragmentary view taken along the plane of the line 13-13 of Figure 12, and looking in the direction of the arrows;
Figure 14 is an enlarged view of a portion of the Figure 12 structure;
Figure 15 is a cross-sectional view taken along tine plane of the line 15-15 of Figure 14, and looking in the direction of the arrows;
Figure 16 is an enlarged, fragmentary view taken along the plane of the line 16-16 of Figure 12, and looking in the direction of the arrows;
Figure 17 is a side view, in partial cross section of a vehicle seat structure embodying the invention;
Figure 18 is a fragmentary view taken along the plane of the line 18-18 of Figure 17, with portions thereof broken away, and looking in the direction of the arrows;
Figure 19 is a cross sectional view taken along the plane of the line 19-19 of Figure 18, and looking in the direction of the arrows;
Figure 20 is a plan view of a portion of the Figures 17 and 21 structure;
Figure 21 is a fragmentary view taken along the plane of the lines 21-21 of Figure 17, with portions thereof broken away, and looking in the direction of the arrows;
Figure 22 is a perspective view showing an alternate embodiment of a portion of the invention;
Figure 23 is an enlarged cross-sectional view taken along the plane of the line 23-23 of Figure 22, and looking in the direction of the arrows;
Figures 24-27 illustrate the steps involved in the operation of a feature of the invention; and
Figure 28 is a view similar to Figure 4 showing a modified pad.

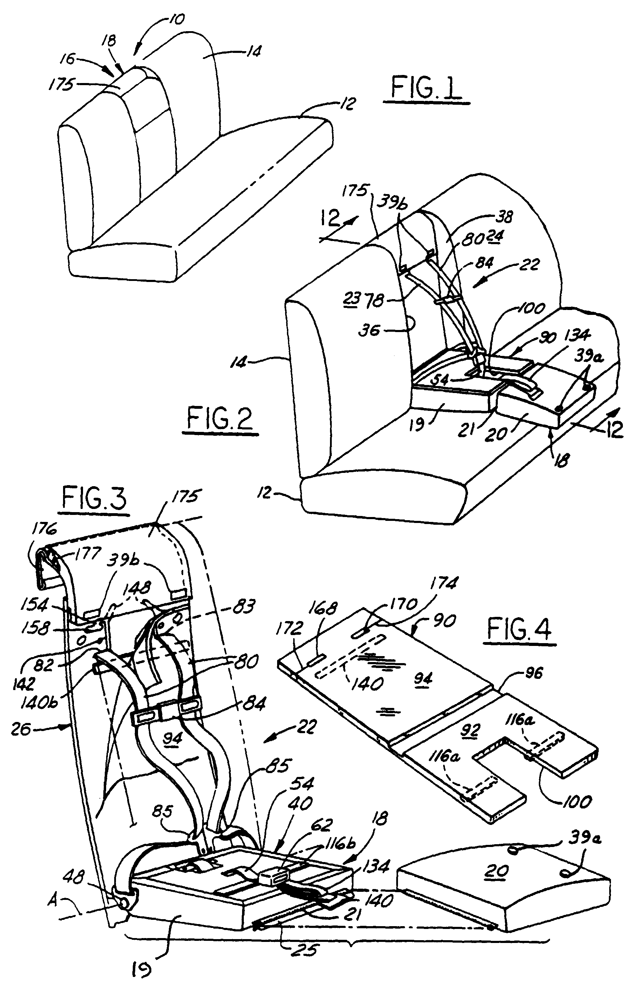

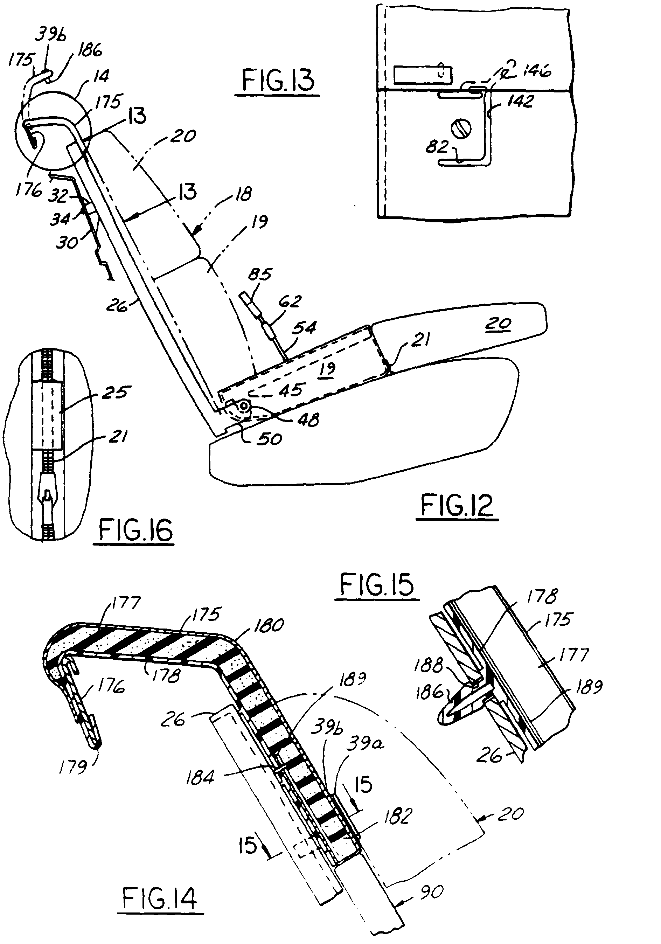

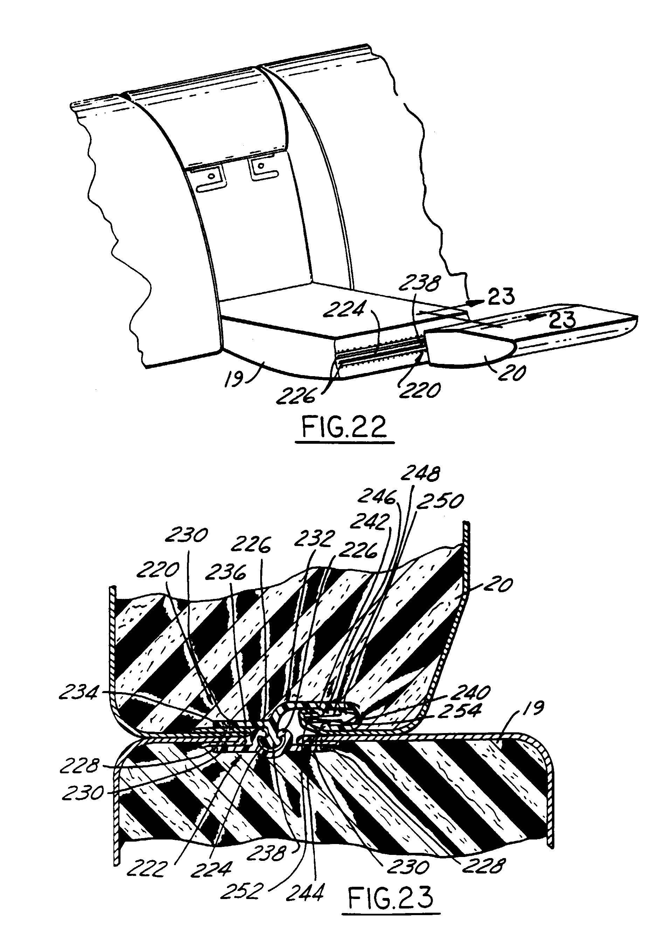

Referring now to the drawings in greater detail, Figure 1 illustrates a vehicle bench seat 10 having a seat cushion assembly 12 and a seat backrest assembly 14. Either one or two side-by-side toddler or child seat modules 16, integrated with the backrest assembly 14, provides a retractable fold-down, articulated seat back section 18 adapted for swinging movement in and out of a recess provided in the backrest assembly 14. As best seen in Figures 2 and 12, the articulated seat back section 18 includes a first movable cushion assembly or bolster segment 19 and a second movable cushion assembly or bolster segment 20 which are articulated at their outer adjacent opposed edges by a suitable flexible and detachable hinge 21. The detachable hinge 21 may include suitable separable fastener means, such as a slide fastener (Fig. 23) or a zipper for detaching the second bolster segment 20. The zipper may be covered by a flap 25 (Figures 3 and 16). The first cushion segment 19 has one side adapted to serve as a back support in an adult seating mode and its other side as a seat bottom in a child seating mode. The second bolster segment 20 has one side adapted to serve as a upper back support in an adult seating mode and its other side as a leg support in a child seating mode.

With reference to Figure 2, the articulated seat back section 18 may be pivoted downwardly from the backrest 14 about a transverse pivot axis "A" (Figure 3) adjacent the first cushion segment 19 lower rear end thereof, to form a modular child seat 22 (Figure 2), while leaving adjacent backrest sections 23 and 24 of the seat backrest 14 intact.

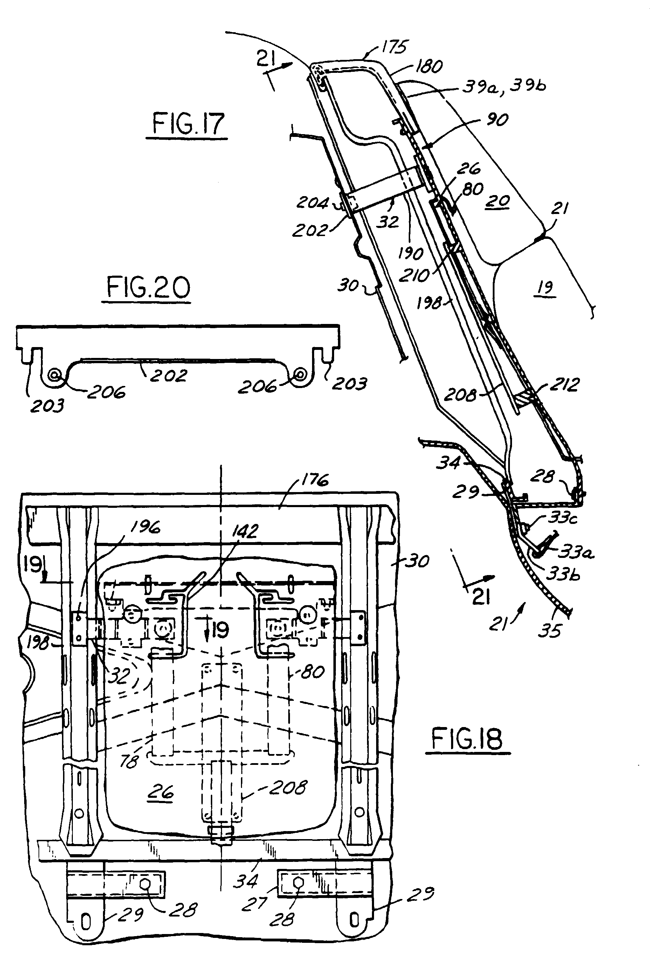

A back panel 26, formed of suitable structural plastic material, such as glass reinforced polypropylene for example, is secured to seat support means, such as a back wall 30 (Figures 12, 18 and 19), by suitable bracket means 32, as will be explained. The bottom end portion of the back panel 26 is secured to the front legs of a pair of substantially Z-shaped seat back 27 brackets (Figures 17 and 18) (one adjacent each lower corner of the back panel) by fasteners 28. The brackets 27, in turn, are secured in any suitable manner, such as by rivets or welding, to the front side of respective vertically oriented straps 29. The upper end portions of the straps 29 are secured in any suitable manner, such as by welding, to the back side of a J-shaped lower cross bar 34. The straps 29 are adjacent a vehicle floor pan 35 (Figure 17). An adult seat belt 33a is secured to a clip 33b which, in turn, is secured by a fastener 33c to each strap 29.

The modular child seat assembly 22 is shown in Figure 3 and includes the articulated seat back section 18 together with the back panel 26. As an initial step to forming the child seat of Figure 2, the articulated seat back section 18 is withdrawn from the backrest 14. The articulated seat back section 18 is moved into its child supporting in-use Figure 2 position by folding down the seat back section 18 from a generally rectangular shaped backrest recess defined by the child seat back panel 26 and a pair of rearwardly extending, recess side walls 36 and 38. The side walls 36 and 38 are formed by the inboard opposed sides of the respective backrest side cushions or sections 23 and 24.

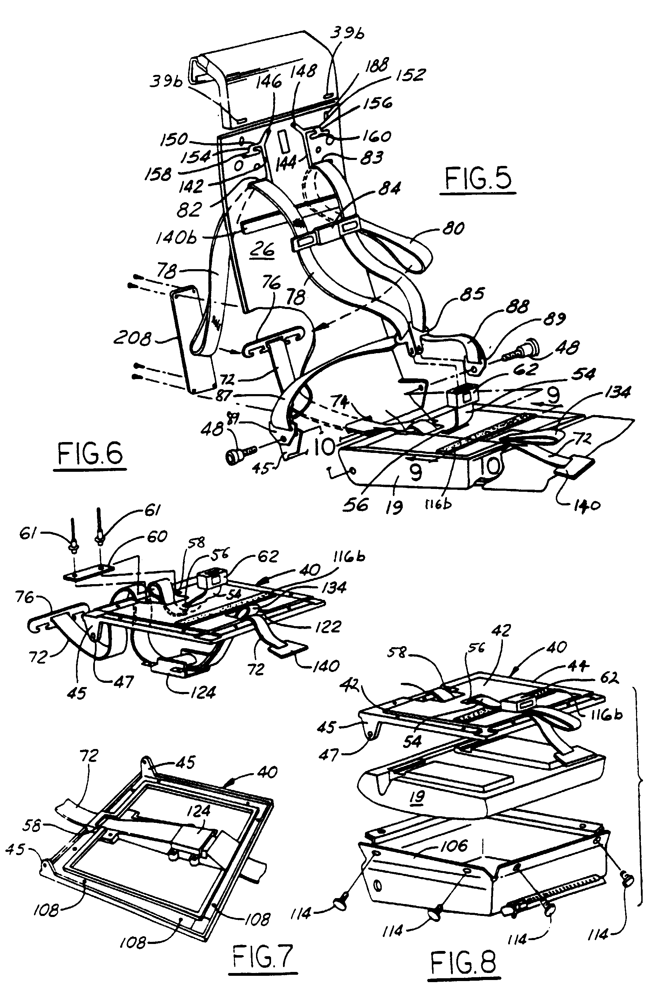

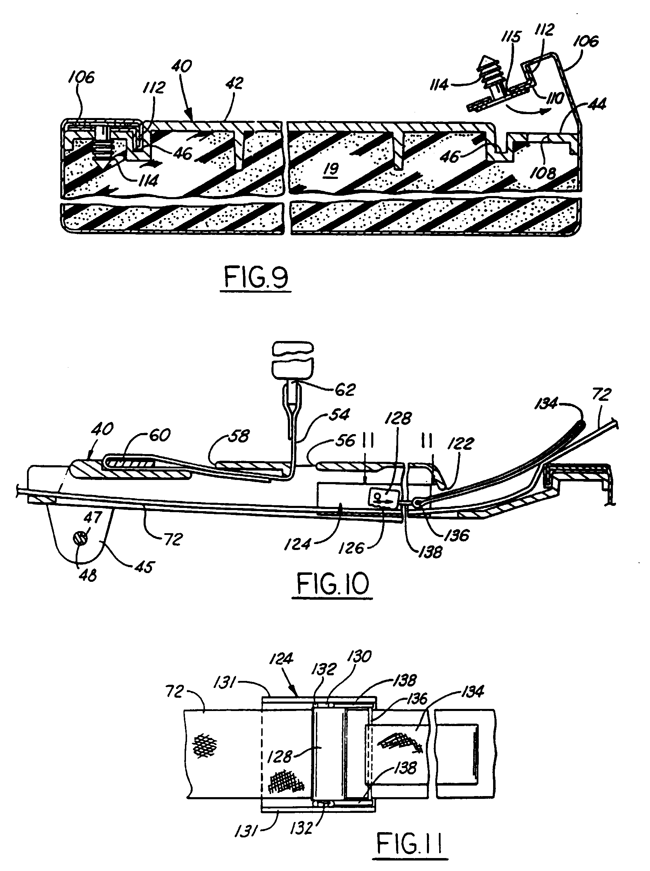

With reference to Figure 8, the back support first cushion segment or child seat bottom 19 includes a rectangular seat pad support platform 40, formed of suitable structural plastic material. As best seen in Figure 9, the support platform 40 has a central planar portion 42 bordered by a peripheral downwardly offset frame-like ledge portion 44 extending therearound. An endless trough or slot 46 is formed in the top surface of the platform 40 located a predetermined distance inside the outer perimeter thereof, providing a continuous boundary between the central portion 42 and the ledge portion 44, for a purpose to be described.

As seen in Figures 6, 8 and 10, a pair of perpendicularly extending mounting flanges 45 are formed adjacent the rear corners of the plastic support pan 40 with axially aligned openings 47 formed therein. The openings 47 are adapted to having suitable fasteners 48 (Figure 10) extended therethrough to pivotally secure the platform 40 to suitable mounting brackets 50 (Figure 12) fixedly secured to extend from the module back panel 26.

A crotch belt 54 extends longitudinally beneath the seat pad support platform 40, and thence upwardly through openings 56 and 58 (Figure 6) formed therein, to be secured at the rear end thereof by a suitable mounting bracket or plate 60. The bracket 60 is secured to the platform 40 by suitable fasteners 61 (Figure 6). A conventional seat belt buckle 62 is secured to the exposed forward end of the belt 54.

As shown in Figure 5, a single adjust belt 72 extends through a slotted opening 74 formed in the back panel 26 and is connected to a safety harness including a T-bar 76 and twin shoulder belts 78 and 80 extending through respective horizontally disposed restraint slots 82 and 83 in the back panel 26 and thence through a releasably interconnected guide member 84 and slotted ends of a pair of opposite hand connector members 85. The latter are adapted to be releasably connected to the buckle 62. The extensions 87 and 88 of the respective belts 78 and 80 are secured by brackets 89 to the mounting flanges 45. The extensions 87 and 88 serve to mount over the child's thighs.

A pad 90 (Figure 4) having a suitable sheet cover formed from flexible material such as vinyl (Figure 4), includes respective seat and back segments 92 and 94 connected by a flexible hinge 96 and is removably mounted against the support platform 40 and back panel 26, as shown in Figure 3. A rectangular opening 100 is formed in the seat segment 92 for mounting around the crotch belt 54 out of the plastic seat support platform 40, and the upper edge 102 of the back segment 94 fits against the back panel 26 up to a point just above the openings 82 and 83. As shown in Figures 3 and 4, a strip of Velcro 140a, or other suitable hook or loop tape strips, is mounted on the back side of the pad 90, adapted to engage a mating Velcro or other suitable strip 140b mounted on the beck panel 26 to retain the pad 90 in its upright position.

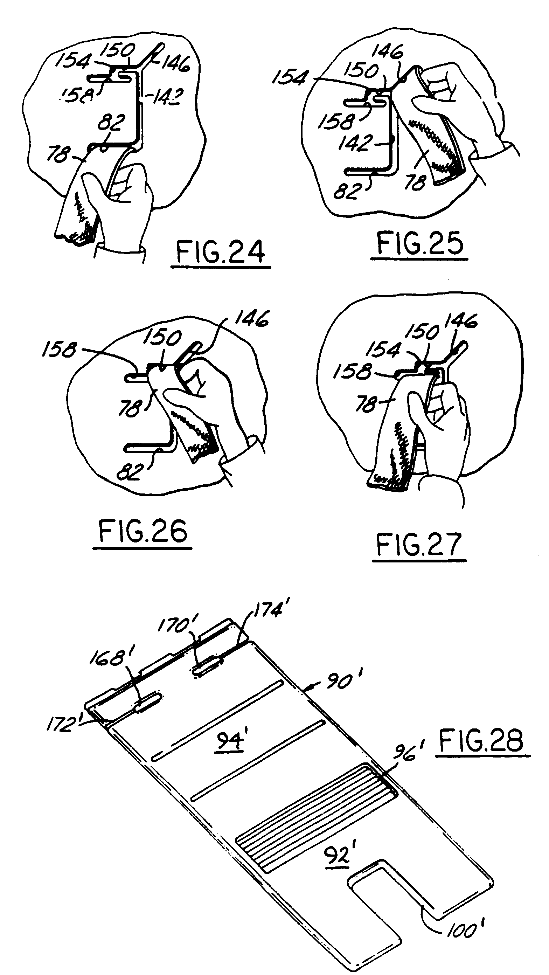

Figure 28 shows an alternate pad 90' covered with suitable cloth or woven material wherein at least the backside portion has a pile-like outer surface adapted for engagement by a suitable hook-type Velcro strip.

As shown in Figure 9, an outer cloth or other material, such as vinyl or leather, cover 106 is wrapped around the cushion segment 19. A plurality of spaced holes 108 are formed in the plastic seat pad support platform 40 intermediate the trough 46 and the edges of the ledge portion 44. A flat retainer 110 includes a flange 112 toned on the inner edge thereof, and suitable fasteners 114 extend through openings 115 formed at spaced intervals along the center line thereof, and thence through the cover 106 into the seat bottom 19. The fasteners 114 are aligned with, and snap into, the holes 108. The cover 106 is wrapped around the flange 112 and retained thereby when projected into the trough 46, as shown at the left side of Figure 9.

Mating Velcro strips or other suitable hook and loop tape strips 116a (Figure 4) and 116b (Figure 6) are respectively secured to the underside of the seat segment 92 and the upper side of the plastic seat support platform 40, respectively, to hold the seat segment in place. In the case of pad 90', having a cover with a fabric-like pile outer surface, the strips 116a (Figure 4) are not required, and the strip 116b is a hook-type strip.

After use, and when no toddler is on board, the leg support 20, the cushion segment 19, and the associated support platform 40 are folded up in an arcuate motion to resume the function of being a portion of a normal motor vehicle or aircraft seat back against the back panel 26 between the sides 36 and 38, to complete the seat back structure.

As shown in Figures 5-11, the belts 78 and 80 connect through the T-bar 76 (Fiqure 6) to the belt 72. The latter extends beneath the plastic support platform 40 and through a front opening 122 and the rear opening 58. It passes through a flat bracket 124 (Figures 6 and 11) prior to exiting through the opening 122 (Figures 6 and 10), wherein it may be retained in position by a serrated surface 126 (Figure 10), serving as a tension adjuster on a cross member 128 which is pivotally mounted on a pin 130 (Figure 11) between oppositely disposed side walls 131 of the bracket 124. A coil spring 132 operatively connected between the cross member 128 and the pin 130 retains the serrated surface 126 in a gripping engagement against the adjust belt 72 until a shoulder adjustment pull strap 134 extending through the front opening 122 is pulled forward to pivot the cross member 128 and thereby release the adjust belt 72 and permit it to be pulled to tighten the shoulder belts 78 and 80 around the child. The pull strap 134 is mounted around a bar 136 connected to forward edges of the cross member 128 by levers 138. A belt tab 140 (Figure 6) is secured at the end of the adjust belt 72 to facilitate the pulling-to-tighten process.

Referring now to Figure 13 and once again to Figures 3 and 5, it is noted that the pair of restraint slots 82 and 83 are the lowermost lateral openings of respective vertical transfer slots 142 and 144. The latter vertical slots communicate at their upper ends with diagonally oriented, upwardly extending converging slots 146 and 148 and lateral slots 150 and 152. The latter lateral slots extend to respective downward inlet openings 154 and 156 communicating with lateral openings 158 and 160. The two sets of slots are formed in the panel 26. When it is necessary to accommodate a larger child, the twin shoulder belts 78 and 80 are moved out of the pair of restraint slots 82 and 83 respectively (Figure 24), into the vertical slots 142 and 144 and thence into the diagonal slots 146 and 148 (Figure 25). The trailing edges of the belts 78 and 80 are then moved into the lateral openings 150 and 152 (Figure 26), to the inlet openings 154 and 156 for seating the belts in the lateral openings 158 and 160 (Figure 27). As shown in Figure 4, the back segment 94 of the pad 90 includes only horizontal slots 168/170, and horizontal slits 172/ 174 continuing from the respective slots 168 and 170, to accommodate the adjustment of the belts 78 and 80 in the various two pair of restraint slots 82/83 and 158/160 and vertical slots 142/144 of the back panel 26.

A close-out cover assembly 175 (Figures 12 and 14) is pivotally mounted on an inverted J-shaped upper cross bar 176 (Figure 14) overlying the upper portion of the back panel 26. The cover assembly 175 includes foam material 177 covered on the back side thereof with a plastic backing 178 having a substantially C-shaped clamp 179 end portion adapted to flex so as to snap over the upper cross bar 176, as shown in Figure 14. A cover 180 of a suitable material, much as cloth fabric, covers the front side of the foam material 177 and a portion of the back side of the C-shaped clamp 179. The cover 180 wraps around the lower front end of the foam material 177, to extend along the lower end of the plastic backing 178. A stiffener panel 182 is mounted intermediate the foam material 177 and the portion of the cover 180 adjacent the plastic backing 178, secured by staples or stitches 184, as required, for a purpose to be described. As shown in Figure 15, snap-in fasteners 186 are formed on the plastic backing 178, so as to be secured to the back panel 26 by snapping through openings 188 formed in the back panel.

As shown in Figures 2 and 3, strips of Velcro 39a, or other suitable hook end loop tape strips, are mounted on the back side of the second bolster segment 20, adapted to engage mating Velcro or other suitable strips 39b mounted on the lower front edge of the cover member 180, as shown in Figures 14 and 17, to retain the seat back section 18 in its upright position, intermediate the recess side walls 36 and 38.

When the seat back section 18 is down in the child usable position, and it is desirable to change the location of the twin shoulder belts 78 and 80 in the two pair of restraint slots 82/83 and 158/160 (Figure 5), the lower portion of the close cover assembly is lifted up, bending about a line represented as 189 in Figure 14, and moving the belts into or out of the slots 168/ 170 of the pad 90 (Figure 4) or slots 168'/170' of the pad 90' (Figure 28) through the respective slits 172/174 or 172'/174'.

Referring now to Figures 17-21, the fastening means for securing the back panel 26 to the back wall 30 via the brackets 32 is shown in more detail.

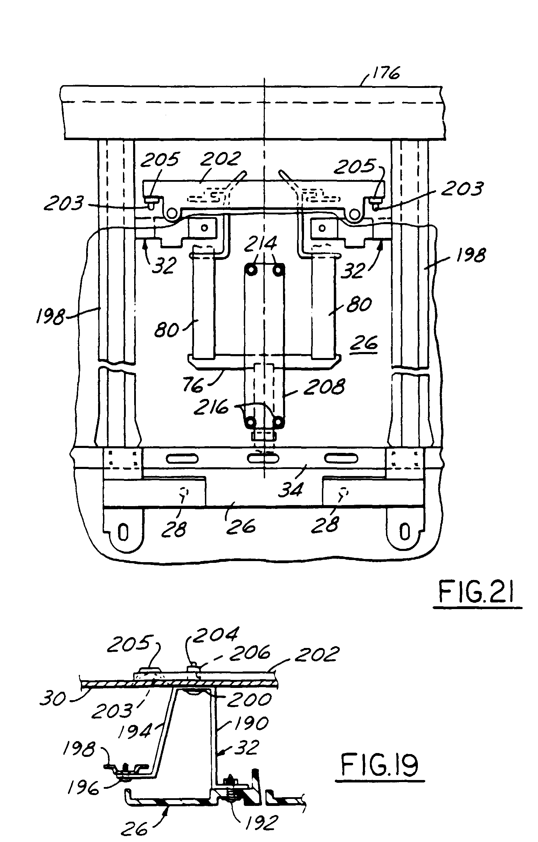

One leg 190 (Figure 19) of each of two brackets 32 is secured by a suitable fastener 192 to the back panel 26, while the other leg 194 of the bracket is secured by a suitable fastener 196 to respective vertical support members 198 (Figure 18). As shown in Figures 17, 18 and 21, the vertical support members 198 are secured at the lower end thereof to the lower J-bar 34 and at the upper end thereof to the upper inverted J-bar 176. The end portion 200 (Figure 19) of the bracket 32 is abutted against the inside of the back wall 30, and a backing or mounting plate 202 (Figure 20) is abutted against the other or rear trunk side of the back wall 30, and secured thereto by suitable fasteners 204. Tabs 203 (Figure 20) are formed adjacent the ends of the mounting plate 202, for mounting in projections 205 (Figure 19) formed by punching out back wall 30. Aligned openings 206 (Figure 20) are formed through the backing or mounting plate 202, such that the fasteners 204 are mounted therethrough (Figure 19) to complete the securing of the seat back panel 26 to the back wall 30.

A T-bar retention panel 208 (Figures 17 and 21) is mounted on upper and lower projections 210 and 212 (Figure 17) by fasteners 214 and 216 (Figure 21) on the back of the back panel 26. As shown in Figure 21, the T-bar 76 is slidably confined between the retention panel 208 and the back panel 26. The single seat belt 72 extends downwardly from the T-bar 76 to exit from the lower end of the panel 208, while the twin shoulder belts 78 and 80 extend upwardly from the T-bar on opposite sides of the panel, to the pair of restraint slots 82/83 or 158/160.

Referring now to Figures 22 and 23, in lieu of the zipper-type flexible and detachable hinge 21 of Figures 3 and 16, a slide fastener assembly 220 is disclosed. The assembly 220 includes a first member 222 having a central U-shaped track 224 with inturned ends 226, and lateral extensions 228 secured by suitable fastener means, such as stitching 230, to folded trim ends of the upper or first bolster segment 19, and a second member 232 secured by stitching 230, or the like, at one edge 234 thereof to a folded trim end 236 of the lower or second bolster segment 20, with a flanged longitudinal protrusion 238 formed at a central location for sliding cooperation with the U-shaped track 224 and inturned ends 226. The second member 232 includes an end 240 opposite the edge 234 which is U-shaped to receive the other folded trim end 242 of the second bolster segment 20. More specifically, an inturned end 244 is formed on the distal end of the U-shaped end 240, with a projection 246 formed on the inner surface of the second member 232 opposite the inturned end 244. An extruded strip 248 having a barb 250 formed on one end thereof is secured at the other end 252 thereof by fastening means, such as stitching 254. As such, the barb 250 is forced through the opening between the inturned end 244 and the projection 246 to secure the folded trim end 242 to the second member 232. With this construction, the flanged protrusion 238 slides through the track 224 to alternately engage and disengage the two bolster segments 19 and 20.

It should be apparent that the invention provides a compact and efficient child restraint system for incorporation as an integrated module of a motor vehicle or aircraft seat structure.

It should also be apparent that, if desired, two such integrated child seat modules could be incorporated in a spaced apart arrangement in the back bench seat structure of a motor vehicle or aircraft.

While but one general embodiment of the invention has been shown and described, other modifications thereof are possible within the scope of the following claims.

## Claims

1. A vehicle seat integrated to selectively provide an adult seat in an adult seat mode and a child's seat in a child seat mode, said vehicle seat comprising a seat cushion assembly (12) constructed and arranged to be mounted on a vehicle in a position to enable an adult occupant of the vehicle to sit thereon in an operative position, a seat back support assembly (14) mounted with respect to said seat cushion assembly (12) so to be disposed in an operative fixed relation therewith, side cushions (23, 24) carried by said seat back support assembly (14) in positions spaced apart a distance sufficient to define a child receiving space between said side cushions of a size to enable a child to be disposed between said side cushions, a plurality of cushion assemblies mounted on said seat back support assembly including a movable cushion assembly (19) constructed and arranged with respect to said seat back support assembly (14) to be moved between (A) an adult mode position wherein said plurality of cushion assemblies including said movable cushion assembly (19) are disposed within the space between the side cushions (23, 24) and provide therewith a cushioned adult back support for engaging the back of an adult seat occupant sitting on the seat cushion assembly, and (B) a child mode position wherein said movable cushion assembly (19) extends from the space between the side cushions (23, 24) in overlying relation to the seat cushion assembly (12), and said plurality of cushion assemblies including said movable cushion assembly (19) provide a cushioned child's seat extending from the bottom of the space in overlying relation to the seat cushion assembly (12), a cushioned child's seat back extending upwardly from said cushioned child's seat within the space between said side cushions (23, 24), and a cushioned child's head support above the cushioned child's seat back, said movable cushion assembly (19) including a frame structure (40) constructed and arranged to extend generally forwardly from a lower portion of the seat back support assembly (14) when said movable cushion assembly (19) is in the child mode position thereof, a structural connection between said frame structure (40) and said seat back support assembly (14) constructed and arranged to enable said movable cushion assembly (19) to be moved between said adult mode and child mode positions, said movable cushion assembly (19) including cushioning material attached to said frame structure (40) in a position to be disposed (A) generally beneath said frame structure (40) when said movable cushion assembly (19) is in said child mode position and (B) generally forwardly of said frame structure (40) between said side cushions (23, 24) when said movable cushion assembly (19) is in said adult mode position, said plurality of cushion assemblies including a removable cushion pad assembly (90') having a seat section (92'), one or more hook fastener sections (116b) on said movable cushion assembly (19) and cooperating loop connections on said seat section (92'), said one or more hook fastener sections (116b) and said cooperating loop connections being constructed and arranged to detachably retain said seat section (92') of said removable cushion pad assembly (90') with said movable cushion assembly (19) so as to be moved therewith between a position generally between the seat back support assembly (14) and the frame structure (40) of said movable cushion assembly (19) when said movable cushion assembly (19) is in the adult mode position thereof and a position in generally overlying relation to the frame structure (40) of said movable cushion assembly (19) when said movable cushion assembly (19) is in the child mode position thereof, and a child's seat belt assembly constructed and arranged to be operable when said movable seat assembly is in the child mode position thereof to be manually moved between (A) a restraint condition enabling a child in a sitting position on said cushioned child's seat to be restrained thereby and (B) a released condition enabling (a) entry of a child into a sitting position on said cushioned child's seat preparatory to restraint or (b) exit of a child from a sitting position on said cushioned child's seat after restraint, said child's seat belt assembly when in said restraint condition with respect to a child in a sitting position on said cushioned child's seat extending downwardly between the legs of the child to a restraint point (60) provided by said frame structure (40) and including a pair of shoulder belts (78, 80) extending from said seat back support assembly (14) over the shoulders of a child in sitting position on said cushioned child's seat, the seat section (92') of said removable cushion pad assembly (90') constituting an upper layer of said cushioned child's seat when said movable cushion assembly (19) is in the child mode position thereof and being constructed and arranged to allow said child's seat belt assembly to be moved into said restraint condition wherein the child's seat belt assembly extends downwardly between the legs of a child in a sitting position on the seat section (92') of said removable cushion pad assembly (90') to the restraint point (60) provided by said frame structure (40), said removable cushion pad assembly (90') being constructed of a first cloth material on an exterior side thereof defining the upper layer of the cushioned child's seat and being constructed of a second cloth material on an opposite side to said exterior side,
characterised in that said cooperating loop connections comprises the second cloth material itself, said second cloth material having a pile-like outer surface extending substantially throughout said opposite side of said seat section (92') providing loops detachably engageable by said one or more hook fastener sections (116b).

2. A vehicle seat according to claim 1 wherein said cooperating loop connections are provided as an integral part of the second cloth material itself, said second cloth material being devoid of one or more separate sections affixed thereto which provide loop connections.

3. A vehicle seat according to claim 1 or 2 wherein the removable cushion pad assembly (90') of the vehicle seat includes a back section (94') hingedly connected to said seat section (92') along a fold line, one or more hook fastener sections (140b) on said seat back support assembly and cooperating loop connections on said back section (94') and wherein said cooperating loop connections on said back section (94') comprising the second cloth material having a pile-like outer surface extending substantially throughout said opposite side of said back section providing loops detachably engageable by the one or more hook fastener sections (140b) fixed to said seat back support assembly.

4. A vehicle seat according to claim 1, 2 or 3 wherein said loops occupy an area of said pile-like outer surface which is substantially greater than the area occupied by said hook fastener sections.

5. A vehicle seat as claimed in claim 1, 2, 3 or 4, wherein said seat section (92') and said back section (94') are hingedly connected along an integral hinge portion (96') generally defining said fold line, said hinge portion (96') having an average thickness less than an average thickness of said seat section (92') and said back section (94').

6. A vehicle seat as claimed in any preceding claim, wherein said first cloth material and said second cloth material have a substantially identical peripheral shape.

7. A vehicle seat according to any preceding claim wherein said first movable cushion assembly provides as the said restraint point a rigid anchor point (60) for the child's seat belt assembly between the legs of a child sitting on said cushioned child's seat, said plurality of cushion assemblies including a cushion assembly in the form of a bolster element (20) connected with said movable cushion assembly so as to be moved together with said movable cushion assembly, said bolster element being constructed and arranged with respect to said movable cushion assembly so as to (1) extend above said movable cushion assembly between said side cushions to provide a part of said adult back support when said movable cushion assembly is in the adult mode position thereof and (2) extend forwardly from said movable cushion assembly in overlying supported relation to said seat cushion assembly when said movable cushion assembly is in said child mode position to provide a leg support for a small child sitting on said cushioned child's seat, said bolster element (20) being connected with said movable cushion assembly by a separable slide fastener assembly constructed and arranged to be moved between a connecting position interconnecting said bolster element with said movable cushion assembly and a separable position enabling said bolster element to be selectively removed from said movable cushion assembly.

8. A vehicle seat according to claim 7 wherein said separable slide fastener assembly is a separable zipper assembly (25).

9. A vehicle seat according to claim 7 wherein said separable slide fastener assembly includes a pair of cooperating members fixed to said movable cushion assembly and to said bolster element (20) respectively, a first of said pair of cooperating members comprising a trough member of generally U-shaped cross-sectional configuration, a second of said pair of cooperating members having a flanged longitudinal protrusion constructed and arranged to detachably slidably engage within the U-shape of said trough member.

10. A vehicle seat according to claim 7 wherein the removable cushion pad assembly (90') of the vehicle seat includes a back section (94') hingedly connected to said seat section along a fold line, one or more hook fastener sections on said seat back support assembly (14) and cooperating loop connections on said back section (94') and wherein said cooperating loop connections on said back section (94') comprising the second cloth material having a pile-like outer surface extending substantially throughout said opposite side of said back section (94') to be detachably engageable by the one or more hook fastener sections fixed to said seat back support assembly.

11. A vehicle seat according to claim 7 wherein said seat back support assembly (14) includes seat back support structure and a rigid back panel (26) of a size to fit within the space between said side cushions, said rigid back panel being connected with said seat back support structure forwardly thereof.

12. A vehicle seat according to claim 11 wherein said rigid back panel (26) has a number of slots therein constructed and arranged to enable the pair of shoulder belts (78, 80) of said child's seat belt assembly to be conveniently moved into a plurality of vertically spaced positions with respect to said child's seat back to selectively accommodate a relatively small child or a relatively large child by manually grasping the shoulder belts extending forwardly of said cushioned child's seat back and moving them selectively into one of said plurality of vertically spaced positions, said plurality of slots including two horizontally spaced and generally horizontally aligned pairs of vertically spaced belt receiving restraint slots (82, 158 and 83, 160) formed in said rigid back panel (26) and a transfer slot (142, 144) extending between the restraint slots of each pair so as to define a cantilevered portion in said rigid back panel between the associated pair of restraint slots, said seat back support structure including a rigid bracket connected directly with each cantilevered portion, each of said brackets being constructed and arranged to provide support from said seat back support structure directly to the cantilevered portion connected therewith while allowing the associated shoulder belt to be selectively moved within the associated transfer slot (142, 144) between the associated pair of restraint slots.

13. A vehicle seat according to claim 12 wherein an upper restraint slot of each pair of restraint slots has the transfer slot associated therewith extending in communicating relation therewith upwardly therefrom between the ends thereof and laterally beyond one of the ends thereof and then generally downwardly beyond said upper restraint slot in laterally spaced relation to said upper restraint slot into communicating relation with a lower restraint slot of the pair.

14. A vehicle seat according to claim 13 wherein said number of slots further includes an inversion slot associated with each transfer slot, each inversion slot having a closed inlet end and an opposite end communicating with the associated transfer slot and being of a length sufficient to enable the associated belt to be moved therein through said opposite end with one edge of said belt leading and to be moved outwardly thereof through said opposite end with an opposite edge of said belt leading so as to enable said belt to be moved into each restraint slot of the associated pair of restraint slots with the edges thereof oriented the same with respect to each restraint slot.

15. A vehicle seat according to claim 14 wherein said plurality of cushion assemblies includes a head support cushion assembly fixed to an upper portion of said rigid back panel (26) between said side cushions, said head support cushion assembly being constructed and arranged to provide said cushioned child's head support when said movable cushion assembly is in the child mode position thereof, and wherein the improvement further comprises said head support cushion assembly being detachably fixedly connected at a lower portion thereof with the upper portion of the rigid back panel by detachable fasteners carried by said head support cushion assembly and detachably connected with said rigid back panel, an upper portion of said head support cushion assembly having a C-shaped clamp connected therewith and with a cross member forming a part of the seat back support structure.

16. A vehicle seat according to claim 11 wherein said rigid back panel (26) has a number of slots therein constructed and arranged to enable the pair of shoulder belts (78, 80) of said child's seat belt assembly to be conveniently moved into a plurality of vertically spaced positions with respect to said child's seat back to selectively accommodate a relatively small child or a relatively large child by manually grasping the shoulder belts extending forwardly of said cushioned child's seat back and moving them selectively into one of said plurality of vertically spaced positions, said number of slots including two horizontally spaced and generally horizontally aligned pairs of vertically spaced belt receiving restraint slots formed in said rigid back panel and a transfer slot associated with each pair of restraint slots, an upper restraint slot of each pair of restraint slots having one end of the transfer slot associated therewith disposed in communicating relation therewith between the ends thereof, each transfer slot extending upwardly from said one end thereof and laterally beyond one of the ends of the associated upper restraint slot and then generally downwardly beyond the associated upper restraint slot in laterally spaced relation to the associated upper restraint slot into communicating relation at an opposite end thereof with a lower restraint slot of the associated pair of restraint slots.

17. A vehicle seat according to claim 16 wherein said number of slots further includes an inversion slot associated with each transfer slot, each inversion slot having a closed inlet end and an opposite end communicating with the associated transfer slot and being of a length sufficient to enable the associated belt to be moved therein through said opposite end with one edge of said belt leading and to be moved outwardly thereof through said opposite end with an opposite edge of said belt leading so as to enable said belt to be moved into each restraint slot of the associated pair of restraint slots with the edges thereof oriented the same with respect to each restraint slot.

18. A vehicle seat according to claim 11 wherein said plurality of cushion assemblies including a head support cushion assembly fixed to an upper portion of said rigid back panel (26) between said side cushions (23, 24), said head support cushion assembly being constructed and arranged to provide said cushioned child's head support when said movable cushion assembly is in the child mode position thereof, and wherein the improvement further comprises said head support cushion assembly being detachably fixedly connected at a lower portion thereof with the upper portion of the rigid back panel by detachable fasteners carried by said head support cushion assembly and detachably connected with said rigid back panel, an upper portion of said head support cushion assembly having a C-shaped clamp connected therewith and with a cross member forming a part of the seat back support structure.

19. A vehicle seat according to any of claims 1 to 6 wherein said seat back support assembly (14) includes a seat back support structure (30) and a rigid back panel (26) of a size to fit within the space between said side cushions, said rigid back panel being connected with said seat back support structure forwardly thereof, said rigid back panel having a number of slots therein constructed and arranged to enable the pair of shoulder belts (78, 80) of said child's seat belt assembly to be conveniently moved into a plurality of vertically spaced positions with respect to said child's seat back to selectively accommodate a relatively small child or a relatively large child by manually grasping the shoulder belts extending forwardly of said cushioned child's seat back and moving them selectively into one of said plurality of vertically spaced positions, said plurality of slots including two horizontally spaced and generally horizontally aligned pairs of vertically spaced belt receiving restraint slots formed in said rigid back panel and a transfer slot extending between the restraint slots of each pair so as to define a cantilevered portion in said rigid back panel between the associated pair of restraint slots, said seat back support structure including a rigid bracket connected directly with each cantilevered portion, each of said brackets being constructed and arranged to provide support from said seat back support structure directly to the cantilevered portion connected therewith while allowing the associated shoulder belt to be selectively moved within the associated transfer slot between the associated pair of restraint slots.

20. A vehicle seat according to claim 19 wherein an upper restraint slot of each pair of restraint slots has the transfer slot associated therewith extending in communicating relation therewith upwardly therefrom between the ends thereof and laterally beyond one of the ends thereof and then generally downwardly beyond said upper restraint slot in laterally spaced relation to said upper restraint slot into communicating relation with a lower restraint slot of the pair.

21. A vehicle seat according to claim 20 wherein said number of slots further includes an inversion slot associated with each transfer slot, each inversion slot having a closed inlet end and an opposite end communicating with the associated transfer slot and being of a length sufficient to enable the associated belt to be moved therein through said opposite end with one edge of said belt leading and to be moved outwardly thereof through said opposite end with an opposite edge of said belt leading so as to enable said belt to be moved into each restraint slot of the associated pair of restraint slots with the edges thereof oriented the same with respect to each restraint slot.

22. A vehicle seat according to claim 19 wherein said plurality of cushion assemblies including a head support cushion assembly fixed to an upper portion of said rigid back panel between said side cushions, said head support cushion assembly being constructed and arranged to provide said cushioned child's head support when said movable cushion assembly is in the child mode position thereof, and wherein the improvement further comprises said head support cushion assembly being detachably fixedly connected at a lower portion thereof with the upper portion of the rigid back panel by detachable fasteners carried by said head support cushion assembly and detachably connected with said rigid back panel, an upper portion of said head support cushion assembly having a C-shaped clamp connected therewith and with a cross member forming a part of the seat back support structure.

23. A vehicle seat according to any of claims 1 to 6 wherein said first movable cushion assembly provides as the said restraint point a rigid anchor point for the child's seat belt assembly between the legs of a child sitting on said cushioned child's seat, said seat back support assembly including a seat back support structure and a rigid back panel of a size to fit within the space between said side cushions, said rigid back panel being connected with said seat back support structure forwardly thereof, said rigid back panel having a number of slots therein constructed and arranged to enable the pair of shoulder belts of said child's seat belt assembly to be conveniently moved into a plurality of vertically spaced positions with respect to said child's seat back to selectively accommodate a relatively small child or a relatively large child by manually grasping the shoulder belts extending forwardly of said cushioned child's seat back and moving them selectively into one of said plurality of vertically spaced positions, said number of slots including two horizontally spaced and generally horizontally aligned pairs of vertically spaced belt receiving restraint slots formed in said rigid back panel and a transfer slot associated with each pair of restraint slots, an upper restraint slot of each pair of restraint slots having one end of the transfer slot associated therewith disposed in communicating relation therewith between the ends thereof, each transfer slot extending upwardly from said one end thereof and laterally beyond one of the ends of the associated upper restraint slot and then generally downwardly beyond the associated upper restraint slot in laterally spaced relation to the associated upper restraint slot into communicating relation at an opposite end thereof with a lower restraint slot of the associated pair of restraint slots.

24. A vehicle seat according to claim 23 wherein said number of slots further includes an inversion slot associated with each transfer slot, each inversion slot having a closed inlet end and an opposite end communicating with the associated transfer slot and being of a length sufficient to enable the associated belt to be moved therein through said opposite end with one edge of said belt leading and to be moved outwardly thereof through said opposite end with an opposite edge of said belt leading so as to enable said belt to be moved into each restraint slot of the associated pair of restraint slots with the edges thereof oriented the same with respect to each restraint slot.

25. A vehicle seat according to any of claims 1 to 6 wherein said plurality of cushion assemblies including a head support cushion assembly fixed to an upper portion of said rigid back panel between said side cushions, said head support cushion assembly being constructed and arranged to provide said cushioned child's head support when said movable cushion assembly is in the child mode position thereof, said head support cushion assembly being detachably fixedly connected at a lower portion thereof with the upper portion of the rigid back panel by detachable fasteners carried by said head support cushion assembly and detachably connected with said rigid back panel, an upper portion of said head support cushion assembly having a C-shaped clamp connected therewith and with a cross member forming a part of the seat back support structure.

26. A vehicle seat according to claim 25 wherein said rigid back panel has a number of slots therein constructed and arranged to enable the pair of shoulder belts of said child's seat belt assembly to be conveniently moved into a plurality of vertically spaced positions with respect to said child's seat back to selectively accommodate a relatively small child or a relatively large child by manually grasping the shoulder belts extending forwardly of said cushioned child's seat back and moving them selectively into one of said plurality of vertically spaced positions, said plurality of slots including two horizontally spaced and generally horizontally aligned pairs of vertically spaced belt receiving restraint slots formed in said rigid back panel and a transfer slot associated with each pair of restraint slots, an upper restraint slot of each pair of restraint slots having the transfer slot associated therewith extending in communicating relation therewith upwardly therefrom between the ends thereof and laterally beyond one of the ends thereof and then generally downwardly beyond said upper restraint slot in laterally spaced relation to said upper restraint slot into communicating relation with a lower restraint slot of the pair, a lower portion of said head support cushion assembly being detachably fixed to the upper portion of said rigid back panel in a position directly above the upper restraint slots in a position to cover portions of the associated transfer slots extending thereabove.

27. A vehicle seat integrated to selectively provide an adult seat in an adult seat mode and a child's seat in a child seat mode, said vehicle seat comprising a seat cushion assembly (12) constructed and arranged to be mounted on a vehicle in a position to enable an adult occupant of the vehicle to sit thereon in an operative position, a seat back support assembly (14) mounted with respect to said seat cushion assembly (12) so to be disposed in an operative fixed relation therewith, side cushions (23, 24) carried by said seat back support assembly (14) in positions spaced apart a distance sufficient to define a child receiving space between said side cushions of a size to enable a child to be disposed between said side cushions, a plurality of cushion assemblies mounted on said seat back support assembly including a movable cushion assembly (19) constructed and arranged with respect to said seat back support assembly (14) to be moved between (A) an adult mode position wherein said plurality of cushion assemblies including said movable cushion assembly (19) are disposed within the space between the side cushions (23, 24) and provide therewith a cushioned adult back support for engaging the back of an adult seat occupant sitting on the seat cushion assembly, and (B) a child mode position wherein said movable cushion assembly (19) extends from the space between the side cushions (23, 24) in overlying relation to the seat cushion assembly (12), and said plurality of cushion assemblies including said movable cushion assembly (19) provide a cushioned child's seat extending from the bottom of the space in overlying relation to the seat cushion assembly (12), a cushioned child's seat back extending upwardly from said cushioned child's seat within the space between said side cushions (23, 24), and a cushioned child's head support above the cushioned child's seat back, said movable cushion assembly (19) including a frame structure (40) constructed and arranged to extend generally forwardly from a lower portion of the seat back support assembly (14) when said movable cushion assembly (19) is in the child mode position thereof, a structural connection between said frame structure (40) and said seat back support assembly (14) constructed and arranged to enable said movable cushion assembly (19) to be moved between said adult mode and child mode positions, said movable cushion assembly (19) including cushioning material (19) attached to said frame structure (40) in a position to be disposed (A) generally beneath said frame structure (40) when said movable cushion assembly (19) is in said child mode position and (B) generally forwardly of said frame structure (40) between said side cushions (23, 24) when said movable cushion assembly (19) is in said adult mode position, said plurality of cushion assemblies including a removable cushion pad assembly (90') having a seat section (92'), one or more hook fastener sections (116b) on said movable cushion assembly (19) and cooperating loop connections on said seat section (92'), said one or more hook fastener sections (116b) and said cooperating loop connections being constructed and arranged to detachably retain said seat section (92') of said removable cushion pad assembly (90') with said movable cushion assembly (19) so as to be moved therewith between a position generally between the seat back support assembly (14) and the frame structure (40) of said movable cushion assembly (19) when said movable cushion assembly (19) is in the adult mode position thereof and a position in generally overlying relation to the frame structure (40) of said movable cushion assembly (19) when said movable cushion assembly (19) is in the child mode position thereof, and a child's seat belt assembly constructed and arranged to be operable when said movable seat assembly is in the child mode position thereof to be manually moved between (A) a restraint condition enabling a child in a sitting position on said cushioned child's seat to be restrained thereby and (B) a released condition enabling (a) entry of a child into a sitting position on said cushioned child's seat preparatory to restraint or (b) exit of a child from a sitting position on said cushioned child's seat after restraint, said child's seat belt assembly when in said restraint condition with respect to a child in a sitting position on said cushioned child's seat extending downwardly between the legs of the child to a restraint point (60) provided by said frame structure (40) and including a pair of shoulder belts (78, 80) extending from said seat back support assembly (14) over the shoulders of a child in sitting position on said cushioned child's seat, the seat section (92') of said removable cushion pad assembly (90') constituting an upper layer of said cushioned child's seat when said movable cushion assembly (19) is in the child mode position thereof and being constructed and arranged to allow said child's seat belt assembly to be moved into said restraint condition wherein the child's seat belt assembly extends downwardly between the legs of a child in a sitting position on the seat section (92') of said removable cushion pad assembly (90') to the restraint point (60) provided by said frame structure (40), said removable cushion pad assembly (90') being constructed of a first cloth material on an exterior side thereof defining the upper layer of the cushioned child's seat and being constructed of a second cloth material on an opposite side to said exterior side,
characterised in that said cooperating loop connections of said seat section (92') are provided by a cloth or other woven material covering the seat section (92') wherein at least the back side portion has a pilelike outer surface adapted for engagement by said one or more hook fastener sections (116b) of said movable cushion assembly (19).

## Patentansprüche

1. Fahrzeugsitz, der integriert ist, um wahlweise einen Erwachsenensitz in einer Erwachsenensitzbetriebsart und einen Kindersitz in einer Kindersitzbetriebsart vorzusehen, wobei der Fahrzeugsitz eine Sitzpolsterbaugruppe (12), die konstruiert und dazu ausgestaltet ist, um an einem Fahrzeug in einer Position montiert zu sein, um es einem erwachsenen Insassen des Fahrzeugs zu ermöglichen, in einer funktionalen Position darauf zu sitzen, eine Sitzrückenlehnenbaugruppe (14), die bezüglich der Sitzpolsterbaugruppe (12) montiert ist, um zu dieser in einer funktional feststehenden Beziehung angeordnet zu sein, Seitenpolster (23, 24), die durch die Sitzrückenlehnenbaugruppe (14) in Positionen gehalten sind, die mit einem Abstand beabstandet sind, der ausreichend ist, um zwischen den Seitenpolstern zur Aufnahme eines Kindes einen Raum zu bilden, der eine Größe hat, um ein Kind zwischen den Seitenpolstern aufnehmen zu können, eine Vielzahl von Polsterbaugruppen, die an der Sitzrückenlehnenbaugruppe montiert sind, einschließlich einer bewegbaren Polsterbaugruppe (19), die bezüglich der Sitzrückenlehnenbaugruppe (14) konstruiert und dazu ausgestaltet ist, um zwischen (A) einer Erwachsenenbetriebsstellung, in der die Vielzahl von Polsterbaugruppen, einschließlich der bewegbaren Polsterbaugruppe (19), in dem Raum zwischen den Seitenpolstern (23, 24) angeordnet ist und zusammen mit diesen eine gepolsterte Erwachsenenrückenlehne zur Anlage mit dem Rücken von einem Erwachsenensitz-Insassen bildet, der auf der Sitzpolsterbaugruppe sitzt, und (B) einer Kinderbetriebsstellung bewegt zu werden, in der sich die bewegbare Polsterbaugruppe (19) aus dem Raum zwischen den Seitenpolstern (23, 24) in darüberliegender Beziehung zu der Sitzpolsterbaugruppe (12) erstreckt und die Vielzahl von Polsterbaugruppen, einschließlich der bewegbaren Polsterbaugruppe (19), einen gepolsterten Kindersitz bildet, der sich von dem Boden des Raumes in darüberliegender Beziehung zu der Sitzpolsterbaugruppe (12) erstreckt, eine gepolsterte Kindersitzrückenlehne, die sich von dem gepolsterten Kindersitz in dem Raum zwischen den Seitenpolstern (23, 24) nach oben erstreckt, eine gepolsterte Kinderkopfabstützung über der gepolsterten Kindersitzrückenlehne, wobei die bewegbare Polsterbaugruppe (19) eine Rahmenstruktur (40) aufweist, die konstruiert und dazu ausgestaltet ist, um sich von einem unteren Bereich der Sitzrückenlehnenbaugruppe (14) allgemein nach vorne zu erstrecken, wenn sich die bewegbare Polsterbaugruppe (19) in ihrer Kinderbetriebsstellung befindet, eine strukturelle Verbindung zwischen der Rahmenstruktur (40) und der Sitzrückenlehnenbaugruppe (14) konstruiert und dazu ausgestaltet ist, um zu ermöglichen, daß die bewegbare Polsterbaugruppe (19) zwischen der Erwachsenenbetriebsstellung und der Kinderbetriebsstellung bewegt werden kann, die bewegbare Polsterbaugruppe (19) Polstermaterial enthält, das an der Rahmenstruktur (40) in einer Position angebracht ist, um (A) allgemein unter der Rabmenstruktur (40) angeordnet zu sein, wenn sich die bewegbare Polsterbaugruppe (19) in der Kinderbetriebsstellung befindet, und (B) allgemein vor der Rahmenstruktur (40) zwischen den Seitenpolstern (23, 24) angeordnet zu sein, wenn sich die bewegbare Polsterbaugruppe (19) in der Erwachsenerzbetriebsstellung befindet, die Vielzahl von Polsterbaugruppen eine abnehmbare Polsterplattenbaugruppe (90') mit einem Sitzabschnitt (92') enthält, ein oder mehrere Hakenbefestigungsabschnitte (116b) an der bewegbaren Polsterbaugruppe (19) und zusammenwirkende Schlaufenverbindungen an dem Sitzabschnitt (92'), wobei der eine oder die mehreren Hakenbefestigungsabschnitte (116b) und die zusammenwirkenden Schlaufenverbindungen konstruiert und dazu ausgestaltet sind, um den Sitzabschnitt (92') der abnehmbaren Polsterplattenbaugruppe (90') lösbar an der bewegbaren Polsterbaugruppe (19) zu halten, um so zusammen mit dieser zwischen einer Stellung allgemein zwischen der Sitzrückenlehnenbaugruppe (14) und der Rahmenstruktur (40) der bewegbaren Polsterbaugruppe (19), wenn sich die bewegbare Polsterbaugruppe (19) in ihrer Erwachsenenbetriebsstellung befindet, und einer Stellung allgemein in darüberliegender Beziehung zu der Rahmenstruktur (40) der bewegbaren Polsterbaugruppe (19) bewegt zu werden, wenn sich die bewegbare Polsterbaugruppe (19) in ihrer Kinderbetriebsstellung befindet, und eine Kindersitzgurtbaugruppe enthält, die konstruiert und dazu ausgestaltet ist, um betätigbar zu sein, wenn sich die bewegbar Sitzbaugruppe in ihrer Kinderbetriebsstellung befindet, um manuell zwischen (A) einem gehaltenen Zustand, in dem es möglich ist, daß ein Kind durch diese in einer sitzenden Position auf dem gepolsterten Kindersitz gehalten wird, und (B) einem gelösten Zustand bewegt zu werden, in dem es möglich ist, (a) ein Kind in Vorbereitung auf das Anschnallen in eine sitzende Position auf dem gepolsterten Kindersitz zu bringen oder (b) ein Kind aus einer sitzenden Position auf dem gepolsterten Kindersitz herauszunehmen, nachdem es abgeschnallt ist, wobei die Kindersitzgurtbaugruppe, wenn sie sich bezüglich eines Kindes in einer sitzenden Position auf dem gepolsterten Kindersitz in dem gehaltenen Zustand befindet, zwischen den Beinen des Kindes nach unten zu einem Haltepunkt (60) verläuft, der durch die Rahmenstruktur (40) vorgesehen ist, und ein Paar Schultergurte (78, 80) hat, die von der Sitzrückenlehnenbaugruppe (14) über die Schultern von einem Kind in einer sitzenden Position auf dem gepolsterten Kindersitz verlaufen, wobei der Sitzabschnitt (92') der abnehmbaren Polsterplattenbaugruppe (90') eine obere Schicht des gepolsterten Kindersitzes bildet, wenn sich die bewegbare Polsterbaugruppe (19) in ihrer Kinderbetriebsstellung befindet, und konstruiert und dazu ausgestaltet ist, um zu ermöglichen, die Kindersitzgurtbaugruppe in den gehaltenen Zustand zu bewegen, in dem die Kindersitzgurtbaugruppe zwischen den Beinen von einem Kind in einer sitzenden Position auf dem Sitzabschnitt (92') der abnehmbaren Polsterplattenbaugruppe (90') nach unten zu dem Haltepunkt (60) verläuft, der durch die Rahmenstruktur (40) vorgesehen ist, wobei die abnehmbare Polsterplattenbaugruppe (90') aus einem ersten Stoffmaterial auf einer Außenseite davon, durch das die obere Schicht von dem gepolsterten Kindersitz gebildet ist, und aus einem zweiten Stoffmaterial auf einer gegenüberliegenden Seite der Außenseite konstruiert ist,
**dadurch gekennzeichnet**, daß die zusammenwirkenden Schlaufenverbindungen das zweite Stoffmaterial beinhalten, wobei das zweite Stoffmaterial eine Flor-ähnliche Außenfläche hat, die sich im wesentlichen über die gegenüberliegende Seite des Sitzabschnitts (92') erstreckt, wodurch Schlaufen vorgesehen sind, die lösbar mit dem einen oder den mehreren Hakenbefestigungsabschnitten (116b) eingreifen können.

2. Fahrzeugsitz nach Anspruch 1, bei dem die zusammenwirkenden Schlaufenverbindungen als ein integrierter Teil des zweiten Stoffmaterials selbst vorgesehen sind, wobei das zweite Stoffmaterial ohne einen oder mehrere separat daran befestigte Abschnitte ist, die Schlaufenverbindungen bilden.

3. Fahrzeugsitz nach Anspruch 1 oder 2, bei dem die abnehmbare Polsterplattenbaugruppe (90') des Fahrzeugsitzes einen Rückenabschnitt (94') hat, der entlang einer Faltlinie gelenkig mit dem Sitzabschnitt (92') verbunden ist, ein oder mehrere Hakenbefestigungsabschnitte (140b) an der Sitzrückenlehnenbaugruppe und zusammenwirkende Schlaufenverbindungen an dem Rückenabschnitt (94') vorgesehen sind, und die zusammenwirkenden Schlaufenverbindungen an dem Rückenabschnitt (94'), die das zweite Stoffmaterial beinhalten, das eine Flor-ähnliche Außenfläche hat, sich im wesentlichen über die gegenüberliegende Seite des Rückenabschnitts erstreckt, wodurch Schlaufen vorgesehen sind, die lösbar mit dem einen oder den mehreren Hakenbefestigungsabschnitten (140b) eingreifen, die an der Sitzrückenlehnenbaugruppe befestigt sind.

4. Fahrzeugsitz nach Anspruch 1, 2 oder 3, bei dem die Schlaufen ein Gebiet der Flor-ähnlichen Außenfläche belegen, das wesentlich größer ist, als das Gebiet, das durch die Hakenbefestigungsabschnitte belegt ist.

5. Fahrzeugsitz nach Anspruch 1, 2, 3 oder 4, bei dem der Sitzabschnitt (92') und der Rückenabschnitt (94') entlang eines integrierten Gelenkabschnitts (96') gelenkig verbunden sind, durch den allgemein die Faltlinie gebildet ist, wobei der Gelenkbereich (96') eine durchschnittliche Dicke hat, die kleiner ist als eine durchschnittliche Dicke des Sitzabschnitts (92') und des Rückenabschnitts (94').

6. Fahrzeugsitz nach einem der vorhergehenden Ansprüche, bei dem das erste Stoffmaterial und das zweite Stoffmaterial eine im wesentlichen identische peripherische Gestalt haben.

7. Fahrzeugsitz nach einem der vorhergehenden Ansprüche, bei dem die erste bewegbare Polsterbaugruppe als den Haltepunkt einen festen Verankerungspunkt (60) für die Kindersitzgurtbaugruppe zwischen den Beinen von einem Kind vorsieht, das auf dem gepolsterten Kindersitz sitzt, die Vielzahl von Polsterbaugruppen eine Polsterbaugruppe in der Form eines Stützelements (20) beinhaltet, das mit der bewegbaren Polsterbaugruppe so verbunden ist, um zusammen mit der bewegbaren Polsterbaugruppe bewegt zu werden, wobei das Abstützelement bezüglich der bewegbaren Polsterbaugruppe konstruiert und dazu ausgestaltet ist, um sich (1) über der bewegbaren Polsterbaugruppe zwischen den Seitenpolstern zu erstrecken, um einen Teil der Erwachsenenrückenlehne zu bilden, wenn sich die bewegbare Polsterbaugruppe in ihrer Erwachsenenbetriebsstellung befindet, und um sich (2) von der bewegbaren Polsterbaugruppe in darüberliegender abgestützter Beziehung zu der Sitzpolsterbaugruppe nach vorne zu erstrecken, wenn sich die bewegbare Polsterbaugruppe in ihrer Kinderbetriebsstellung befindet, um eine Beinabstützung für ein kleines Kind vorzusehen, das auf dem gepolsterten Kindersitz sitzt, wobei das Abstützelement (20) mit der bewegbaren Polsterbaugruppe durch eine trennbare Gleitbefestigungsbaugruppe verbunden ist, die konstruiert und dazu ausgestaltet ist, um zwischen einer Verbindungsposition, in der das Abstützelement mit der bewegbaren Polsterbaugruppe verbunden ist, und einer trennbaren Position bewegt zu werden, in der es möglich ist, das Abstützelement wahlweise von der bewegbaren Polsterbaugruppe abzunehmen.

8. Fahrzeugsitz nach Anspruch 7, bei dem die trennbare Gleitbefestigungsbaugruppe eine trennbare Reißverschußbaugruppe (25) ist.

9. Fahrzeugsitz nach Anspruch 7, bei dem die trennbare Gleitbefestigungsbaugruppe ein Paar zusammenwirkende Bauteile enthält, die an der bewegbaren Polsterbaugruppe beziehungsweise an dem Abstützelement (20) angebracht sind, wobei ein erstes von dem Paar zusammenwirkender Bauteile ein Durchgangsbauteil mit allgemein U-förmigem Querschnitt ist und ein zweites von dem Paar zusammenwirkender Bauteile einen flanschförmigen längsgerichteten Vorsprung hat, der konstruiert und dazu ausgestaltet ist, um herausnehmbar und verschiebbar in die U-Form des Durchgangsbauteils einzugreifen.

10. Fahrzeugsitz nach Anspruch 7, bei dem die abnehmbare Polsterplattenbaugruppe (90') des Fahrzeugsitzes einen Rückenabschnitt (94') hat, der entlang einer Faltlinie gelenkig mit dem Sitzabschnitt (92') verbunden ist, ein oder mehrere Hakenbefestigungsabschnitte (140b) an der Sitzrückenlehnenbaugruppe und zusammenwirkende Schlaufenverbindungen an dem Rückenabschnitt (94') vorgesehen sind, wobei die zusammenwirkenden Schlaufenverbindungen an dem Rückenabschnitt (94'), die das zweite Stoffmaterial beinhalten, das eine Flor-ähnliche Außenfläche hat, die sich im wesentlichen über die gegenüberliegende Seite des Rückenabschnitts erstreckt, um lösbar mit dem einen oder den mehreren Hakenbefestigungsabschnitten einzugreifen, die an der Sitzrückenlehnenbaugruppe befestigt sind.

11. Fahrzeugsitz nach Anspruch 7, bei dem die Sitzrückenlehnenbaugruppe (14) eine Sitzrückenlehnenstruktur und eine starre Rückenplatte (26) aufweist, die eine Größe hat, um in den Raum zwischen den Seitenpolstern zu passen, wobei die starre Rückenplatte mit der Sitzrückenlehnenstruktur an deren Vorderseite verbunden ist.

12. Fahrzeugsitz nach Anspruch 11, bei dem die starre Rückenplatte (26) eine Anzahl von Schlitzen darin hat, die konstruiert und dazu ausgestaltet sind, um zu ermöglichen, das Paar Schultergurte (78, 80) der Kindersitzgurtbaugruppe bequem in eine Vielzahl von vertikal beabstandeten Positionen bezüglich der Kindersitzrückenlehne zu bewegen, um wahlweise ein relativ kleines Kind oder ein relativ großes Kind aufnehmen zu können, indem die Schultergurte manuell gegriffen werden, die vor der gepolsterten Kindersitzrückenlehne verlaufen, und sie wahlweise in eine der Vielzahl von vertikal beabstandeten Positionen bewegt werden, wobei die Vielzahl von Schlitzen zwei horizontal beabstandete und allgemein horizontal ausgerichtete Paare von vertikal beabstandeten Gurtaufnahme-Halteschlitzen (82, 158 und 83, 160), die in der starren Rückenplatte (26) ausgebildet sind, und einen Verbindungsschlitz (142, 144) umfaßt, der sich zwischen den Halteschlitzen von jedem Paar erstreckt, um in der starren Rückenplatte zwischen dem zugehörigen Paar von Halteschlitzen einen freitragenden Bereich zu bilden, wobei die Sitzrückenlehnenstruktur einen starren Träger aufweist, der direkt mit jedem freitragenden Bereich verbunden ist, wobei jeder der Träger konstruiert und dazu ausgestaltet ist, um von der Sitzrückenlehnenstruktur eine Abstützung direkt auf den freitragenden Bereich vorzusehen, der damit verbunden ist, während es möglich ist, den zugehörigen Schultergurt wahlweise in den zugehörigen Verbindungsschlitz (142, 144) zwischen dem zugehörigen Paar von Halteschlitzen zu bewegen.

13. Fahrzeugsitz nach Anspruch 12, bei dem sich der Verbindungsschlitz, der mit einem oberen Halteschlitz von jedem Paar von Halteschlitzen in Beziehung steht, in kommunizierender Beziehung mit diesem zwischen den Enden von diesem nach oben und seitlich bis über eines von dessen Enden hinaus und dann allgemein nach unten bis über den oberen Halteschlitz hinaus in seitlich beabstandeter Beziehung zu dem oberen Halteschlitz bis in kommunizierende Beziehung mit einem unteren Halteschlitz von dem Paar erstreckt.

14. Fahrzeugsitz nach Anspruch 13, bei dem die Anzahl von Schlitzen außerdem einen Inversionsschlitz beinhaltet, der mit jedem Verbindungsschlitz in Beziehung steht, wobei jeder Inversionsschlitz ein geschlossenes Eingangs-Ende und ein gegenüberliegendes Ende, das mit dem zugehörigen Verbindungsschlitz in Verbindung steht, und eine Länge hat, die ausreichend ist, um zu ermöglichen, daß der zugehörige Gurt durch das gegenüberliegende Ende in diesen hineinbewegt werden kann, wobei eine Kante von dem Gurt vorangeht, und durch das gegenüberliegende Ende, wobei eine gegenüberliegende Kante von dem Gurt vorangeht, aus diesem hinausbewegt werden kann, um so den Gurt in jeden Halteschlitz des zugehörigen Paares von Halteschlitzen bewegen zu können, wobei die Kanten davon bezüglich jedes Halteschlitzes gleich ausgerichtet sind.

15. Fahrzeugsitz nach Anspruch 14, bei dem die Vielzahl von Polsterbaugruppen eine Kopfabstützpolsterbaugruppe enthält, die an einem oberen Bereich der starren Rückenplatte (26) zwischen den Seitenpolstern angebracht ist, wobei die Kopfabstützpolsterbaugruppe konstruiert und dazu ausgestaltet ist, um die gepolsterte Kinderkopfabstützung vorzusehen, wenn sich die bewegbare Polsterbaugruppe in ihrer Kinderbetriebsstellung befindet, und wobei die Verbesserung außerdem beinhaltet, daß die Kopfabstützpolsterbaugruppe mit einem unteren Bereich davon an dem oberen Bereich der starren Rückenplatte durch abnehmbare Befestigungen abnehmbar befestigt ist, die durch die Kopfabstützpolsterbaugruppe gehalten und lösbar an der starren Rückenplatte befestigt sind, wobei ein oberer Bereich der Kopfabstützpolsterbaugruppe eine damit verbundene C-förmige Klammer hat, und wobei ein Querbauteil einen Teil der Sitzrückenlehnenstruktur bildet.

16. Fahrzeugsitz nach Anspruch 11, bei dem die starre Rückenplatte (26) eine Anzahl von Schlitzen darin hat, die konstruiert und dazu ausgestaltet sind, um zu ermöglichen, das Paar Schultergurte (78, 80) der Kindersitzgurtbaugruppe bequem in eine Vielzahl von vertikal beabstandeten Positionen bezüglich der Kindersitzrückenlehne zu bewegen, um wahlweise ein relativ kleines Kind oder ein relativ großes Kind aufnehmen zu können, indem die Schultergurte manuell gegriffen werden, die vor der gepolsterten Kindersitzrückenlehne verlaufen, und sie wahlweise in eine der Vielzahl von vertikal beabstandeten Positionen bewegt werden, wobei die Vielzahl von Schlitzen zwei horizontal beabstandete und allgemein horizontal ausgerichtete Paare von vertikal beabstandeten Gurtaufnahme-Halteschlitze, die in der starren Rückenplatte ausgebildet sind, und einen Verbindungsschlitz umfaßt, der mit jedem Paar von Halteschlitzen in Beziehung steht, wobei ein oberer Halteschlitz von jedem Paar von Halteschlitzen mit einem Ende des Verbindungsschlitzes in Beziehung steht, das mit diesem zwischen den Enden von diesem in kommunizierender Beziehung angeordnet ist, wobei sich jeder Verbindungsschlitz von dem einen Ende davon nach oben und seitlich bis über eines der Enden des zugehörigen Halteschlitzes hinaus und dann allgemein nach unten bis über den zugehörigen oberen Halteschlitz hinaus in seitlich beabstandeter Beziehung zu dem zugehörigen oberen Halteschlitz bis in kommunizierende Beziehung an einem gegenüberliegenden Ende davon mit einem unteren Halteschlitz des zugehörigen Paares von Halteschlitzen erstreckt.

17. Fabrzeugsitz nach Anspruch 16, bei dem die Anzahl von Schlitzen außerdem einen Inversionsschlitz beinhaltet, der mit jedem Verbindungsschlitz in Beziehung steht, wobei jeder Inversionsschlitz ein geschlossenes Eingangs-Ende und ein gegenüberliegendes Ende, das mit dem zugehörigen Verbindungsschlitz in Verbindung steht, und eine Länge hat, die ausreichend ist, um zu ermöglichen, daß der zugehörige Gurt durch das gegenüberliegende Ende in diesen hineinbewegt werden kann, wobei eine Kante von dem Gurt vorangeht, und durch das gegenüberliegende Ende, wobei eine gegenüberliegende Kante von dem Gurt vorangeht, aus diesem hinausbewegt werden kann, um so den Gurt in jeden Halteschlitz des zugehörigen Paares von Halteschlitzen bewegen zu können, wobei die Kanten davon bezüglich jedes Halteschlitzes gleich ausgerichtet sind.

18. Fahrzeugsitz nach Anspruch 11, bei dem die Vielzahl von Polsterbaugruppen eine Kopfabstützpolsterbaugruppe enthält, die an einem oberen Bereich der starren Rückenplatte (26) zwischen den Seitenpolstern (23, 24) angebracht ist, wobei die Kopfabstützpolsterbaugruppe konstruiert und dazu ausgestaltet ist, um die gepolsterte Kinderkopfabstützung vorzusehen, wenn sich die bewegbare Polsterbaugruppe in ihrer Kinderbetriebsstellung befindet, und wobei die Verbesserung außerdem beinhaltet, daß die Kopfabstützpolsterbaugruppe mit einem unteren Bereich davon an dem oberen Bereich der starren Rückenplatte durch abnehmbare Befestigungen abnehmbar befestigt ist, die durch die Kopfabstützpolsterbaugruppe gehalten und lösbar an der starren Rückenplatte befestigt sind, wobei ein oberer Bereich der Kopfabstützpolsterbaugruppe eine damit verbundene C-förmige Klammer hat, und wobei ein Querbauteil einen Teil der Sitzrückenlehnenstruktur bildet.

19. Fahrzeugsitz nach einem der Ansprüche 1 bis 6, bei dem die Sitzrückenlehnenbaugruppe (14) eine Sitzrückenlehnenstruktur (30) und eine starre Rückenplatte (26) aufweist, die eine Größe hat, um in den Raum zwischen den Seitenpolstern zu passen, wobei die starre Rückenplatte mit der Sitzrückenlehnenstruktur an deren Vorderseite verbunden ist, wobei die starre Rückenplatte eine Anzahl von Schlitzen darin hat, die konstruiert und dazu ausgestaltet sind, um zu ermöglichen, das Paar Schultergurte (78, 80) der Kindersitzgurtbaugruppe bequem in eine Vielzahl von vertikal beabstandeten Positionen bezüglich der Kindersitzrückenlehne zu bewegen, um wahlweise ein relativ kleines Kind oder ein relativ großes Kind aufnehmen zu können, indem die Schultergurte manuell gegriffen werden, die vor der gepolsterten Kindersitzrückenlehne verlaufen, und sie wahlweise in eine der Vielzahl von vertikal beabstandeten Positionen bewegt werden, wobei die Vielzahl von Schlitzen zwei horizontal beabstandete und allgemein horizontal ausgerichtete Paare von vertikal beabstandeten Gurtaufnahme-Halteschlitzen, die in der starren Rückenplatte ausgebildet sind, und einen Verbindungsschlitz umfaßt, der sich zwischen den Halteschlitzen von jedem Paar erstreckt, um in der starren Rückenplatte zwischen dem zugehörigen Paar von Halteschlitzen einen freitragenden Bereich zu bilden, wobei die Sitzrückenlehnenstruktur einen starren Träger aufweist, der direkt mit jedem freitragenden Bereich verbunden ist, wobei jeder der Träger konstruiert und dazu ausgestaltet ist, um von der Sitzrückenlehnenstruktur eine Abstützung direkt auf den freitragenden Bereich vorzusehen, der damit verbunden ist, während es möglich ist, den zugehörigen Schultergurt wahlweise in den zugehörigen Verbindungsschlitz zwischen dem zugehörigen Paar von Halteschlitzen zu bewegen.

20. Fahrzeugsitz nach Anspruch 19, bei dem sich der Verbindungsschlitz, der mit einem oberen Halteschlitz von jedem Paar von Halteschlitzen in Beziehung steht, in kommunizierender Beziehung mit diesem zwischen den Enden von diesem nach oben und seitlich bis über eines von dessen Enden hinaus und dann allgemein nach unten bis über den oberen Halteschlitz hinaus in seitlich beabstandeter Beziehung zu dem oberen Halteschlitz bis in kommunizierende Beziehung mit einem unteren Halteschlitz von dem Paar erstreckt.

21. Fahrzeugsitz nach Anspruch 20, bei dem die Anzahl von Schlitzen außerdem einen Inversionsschlitz beinhaltet, der mit jedem Verbindungsschlitz in Beziehung steht, wobei jeder Inversionsschlitz ein geschlossenes Eingangs-Ende und ein gegenüberliegendes Ende, das mit dem zugehörigen Verbindungsschlitz in Verbindung steht, und eine Länge hat, die ausreichend ist, um zu ermöglichen, daß der zugehörige Gurt durch das gegenüberliegende Ende in diesen hineinbewegt werden kann, wobei eine Kante von dem Gurt vorangeht, und durch das gegenüberliegende Ende, wobei eine gegenüberliegenden Kante von dem Gurt vorangeht, aus diesem hinausbewegt werden kann, um so den Gurt in jeden Halteschlitz des zugehörigen Paares von Halteschlitzen bewegen zu können, wobei die Kanten davon bezüglich jedes Halteschlitzes gleich ausgerichtet sind.

22. Fahrzeugsitz nach Anspruch 19, bei dem die Vielzahl von Polsterbaugruppen eine Kopfabstützpolsterbaugruppe enthält, die an einem oberen Bereich der starren Rückenplatte zwischen den Seitenpolstern angebracht ist, wobei die Kopfabstützpolsterbaugruppe konstruiert und dazu ausgestaltet ist, um die gepolsterte Kinderkopfabstützung vorzusehen, wenn sich die bewegbare Polsterbaugruppe in ihrer Kinderbetriebsstellung befindet, und wobei die Verbesserung außerdem beinhaltet, daß die Kopfabstützpolsterbaugruppe mit einem unteren Bereich davon an dem oberen Bereich der starren Rückenplatte durch abnehmbare Befestigungen abnehmbar befestigt ist, die durch die Kopfabstützpolsterbaugruppe gehalten und lösbar an der starren Rückenplatte befestigt sind, wobei ein oberer Bereich der Kopfabstützpolsterbaugruppe eine damit verbundene C-förmige Klammer hat, und wobei ein Querbauteil einen Teil der Sitzrückenlehnenstruktur bildet.

23. Fahrzeugsitz nach einem der Ansprüche 1 bis 6, bei dem die erste bewegbare Polsterbaugruppe als den Haltepunkt einen festen Verankerungspunkt für die Kindersitzgurtbaugruppe zwischen den Beinen von einem Kind vorsieht, das auf dem gepolsterten Kindersitz sitzt, wobei die Sitzrückenlehnenbaugruppe eine Sitzrückenlehnenstruktur und eine starre Rückenplatte aufweist, die eine Größe hat, um in den Raum zwischen den Seitenpolstern zu passen, wobei die starre Rückenplatte mit der Sitzrückenlehnenstruktur an deren Vorderseite verbunden ist, wobei die starre Rückenplatte eine Anzahl von Schlitzen darin hat, die konstruiert und dazu ausgestaltet sind, um zu ermöglichen, das Paar Schultergurte der Kindersitzgurtbaugruppe bequem in eine Vielzahl von vertikal beabstandeten Positionen bezüglich der Kindersitzrückenlehne zu bewegen, um wahlweise ein relativ kleines Kind oder ein relativ großes Kind aufnehmen zu können, indem die Schultergurte manuell gegriffen werden, die vor der gepolsterten Kindersitzrückenlehne verlaufen, und sie wahlweise in eine der Vielzahl von vertikal beabstandeten Positionen bewegt werden, wobei die Vielzahl von Schlitzen zwei horizontal beabstandete und allgemein horizontal ausgerichtete Paare von vertikal beabstandeten Gurtaufnahme-Halteschlitzen, die in der starren Rückenplatte ausgebildet sind, und einen Verbindungsschlitz umfaßt, der mit jedem Paar von Halteschlitzen in Beziehung steht, wobei ein oberer Halteschlitz von jedem Paar von Halteschlitzen mit einem Ende des Verbindungsschlitzes in Beziehung steht, das mit diesem zwischen den Enden von diesem in kommunizierender Beziehung angeordnet ist, wobei sich jeder Verbindungsschlitz von dem einen Ende davon nach oben und seitlich bis über eines der Enden des zugehörigen Halteschlitzes hinaus und dann allgemein nach unten bis über den zugehörigen oberen Halteschlitz hinaus in seitlich beabstandeter Beziehung zu dem zugehörigen oberen Halteschlitz bis in kommunizierende Beziehung an einem gegenüberliegenden Ende davon mit einem unteren Halteschlitz des zugehörigen Paares von Halteschlitzen erstreckt.

24. Fahrzeugsitz nach Anspruch 23, bei dem die Anzahl von Schlitzen außerdem einen Inversionsschlitz beinhaltet, der mit jedem Verbindungsschlitz in Beziehung steht, wobei jeder Inversionsschlitz ein geschlossenes Eingangs-Ende und ein gegenüberliegendes Ende, das mit dem zugehörigen Verbindungsschlitz in Verbindung steht und eine Länge hat, die ausreichend ist, um zu ermöglichen, daß der zugehörige Gurt durch das gegenüberliegende Ende in diesen hineinbewegt werden kann, wobei eine Kante von dem Gurt vorangeht, und durch das gegenüberliegende Ende, wobei eine gegenüberliegende Kante von dem Gurt vorangeht, aus diesem hinausbewegt werden kann, um so den Gurt in jeden Halteschlitz des zugehörigen Paares von Halteschlitzen bewegen zu können, wobei die Kanten davon bezüglich jedes Halteschlitzes gleich ausgerichtet sind.

25. Fahrzeugsitz nach einem der Ansprüche 1 bis 6, bei dem die Vielzahl von Polsterbaugruppen eine Kopfabstützpolsterbaugruppe enthält, die an einem oberen Bereich der starren Rückenplatte zwischen den Seitenpolstern angebracht ist, wobei die Kopfabstützpolsterbaugruppe konstruiert und dazu ausgestaltet ist, um die gepolsterte Kinderkopfabstützung vorzusehen, wenn sich die bewegbare Polsterbaugruppe in ihrer Kinderbetriebsstellung befindet, wobei die Kopfabstützpolsterbaugruppe mit einem unteren Bereich davon an dem oberen Bereich der starren Rückenplatte durch abnehmbare Befestigungen abnehmbar befestigt ist, die durch die Kopfabstützpolsterbaugruppe gehalten und lösbar an der starren Rückenplatte verbunden sind, wobei ein oberer Bereich der Kopfabstützpolsterbaugruppe eine damit verbundene C-förmige Klammer hat, und wobei ein Querbauteil einen Teil der Sitzrückenlehnenstruktur bildet.

26. Fahrzeugsitz nach Anspruch 25, bei dem die starre Rückenplatte eine Anzahl von Schlitzen darin hat, die konstruiert und dazu ausgestaltet sind, um zu ermöglichen, das Paar Schultergurte der Kindersitzgurtbaugruppe bequem in eine Vielzahl von vertikal beabstandeten Positionen bezüglich der Kindersitzrückenlehne zu bewegen, um wahlweise ein relativ kleines Kind oder ein relativ großes Kind aufnehmen zu können, indem die Schultergurte manuell gegriffen werden, die vor der gepolsterten Kindersitzrückenlehne verlaufen, und sie wahlweise in eine der Vielzahl von vertikal beabstandeten Positionen bewegt werden, wobei die Vielzahl von Schlitzen zwei horizontal beabstandete und allgemein horizontal ausgerichtete Paare von vertikal beabstandeten Gurtaufnahme-Halteschlitzen, die in der starren Rückenplatte ausgebildet sind, und einen Verbindungsschlitz umfaßt, der mit jedem Paar von Halteschlitzen in Beziehung steht, wobei ein oberer Halteschlitz von jedem Paar von Halteschlitzen mit dem verbindungsschlitz in Beziehung steht, der sich von diesem in kommunizierender Beziehung mit diesem zwischen den Enden von diesem nach oben und seitlich bis über eines der Enden davon hinaus und dann allgemein nach unten bis über den zugehörigen oberen Halteschlitz hinaus in seitlich beabstandeter Beziehung zu dem oberen Halteschlitz bis in kommunizierende Beziehung mit einem unteren Halteschlitz des Paares erstreckt, wobei ein unterer Bereich der Kopfabstützpolsterbaugruppe abnehmbar an dem oberen Bereich der starren Rückenplatte in einer Position direkt über den oberen Halteschlitzen in einer Position befestigt ist, um Bereiche des zugehörigen Verbindungsschlitzes zu überdecken, die sich darüber erstrecken.

27. Fahrzeugsitz, der integriert ist, um wahlweise einen Erwachsenensitz in einer Erwachsenensitzbetriebsart und einen Kindersitz in einer Kindersitzbetriebsart vorzusehen, wobei der Fahrzeugsitz eine Sitzpolsterbaugruppe (12), die konstruiert und dazu ausgestaltet ist, um an einem Fahrzeug in einer Position montiert zu sein, um es einem erwachsenen Insassen des Fahrzeugs zu ermöglichen, in einer funktionalen Position darauf zu sitzen, eine Sitzrückenlehnenbaugruppe (14), die bezüglich der Sitzpolsterbaugruppe (12) montiert ist, um zu dieser in einer funktional feststehenden Beziehung angeordnet zu sein, Seitenpolster (23, 24), die durch die Sitzrückenlehnenbaugruppe (14) in Positionen gehalten sind, die mit einem Abstand beabstandet sind, der ausreichend ist, um zwischen den Seitenpolstern zur Aufnahme eines Kindes einen Raum zu bilden, der eine Größe hat, um ein Kind zwischen den Seitenpolstern aufnehmen zu können, eine Vielzahl von Polsterbaugruppen, die an der Sitzrückenlehnenbaugruppe montiert sind, einschließlich einer bewegbaren Polsterbaugruppe (19), die bezüglich der Sitzrückenlehnenbaugruppe (14) konstruiert und dazu ausgestaltet ist, um zwischen (A) einer Erwachsenenbetriebsstellung, in der die Vielzahl von Polsterbaugruppen, einschließlich der bewegbaren Polsterbaugruppe (19), in dem Raum zwischen den Seitenpolstern (23, 24) angeordnet ist und zusammen mit diesen eine gepolsterte Erwachsenenrückenlehne zur Anlage mit dem Rücken von einem Erwachsenensitz-Insassen bildet, der auf der Sitzpolsterbaugruppe sitzt, und (B) einer Kinderbetriebsstellung bewegt zu werden, in der sich die bewegbare Polsterbaugruppe (19) aus dem Raum zwischen den Seitenpolstern (23, 24) in darüberliegender Beziehung zu der Sitzpolsterbaugruppe (12) erstreckt und die Vielzahl von Polsterbaugruppen, einschließlich der bewegbaren Polsterbaugruppe (19), einen gepolsterten Kindersitz bildet, der sich von dem Boden des Raumes in darüberliegender Beziehung zu der Sitzpolsterbaugruppe (12) erstreckt, eine gepolsterte Kindersitzrückenlehne, die sich von dem gepolsterten Kindersitz in dem Raum zwischen den Seitenpolstern (23, 24) nach oben erstreckt, eine gepolsterte Kinderkopfabstützung über der gepolsterten Kindersitzrückenlehne, wobei die bewegbare Polsterbaugruppe (19) eine Rahmenstruktur (40) aufweist, die konstruiert und dazu ausgestaltet ist, um sich von einem unteren Bereich der Sitzrückenlehnenbaugruppe (14) allgemein nach vorne zu erstrecken, wenn sich die bewegbare Polsterbaugruppe (19) in ihrer Kinderbetriebsstellung befindet, eine strukturelle Verbindung zwischen der Rahmenstruktur (40) und der Sitzrückenlehnenbaugruppe (14) konstruiert und dazu ausgestaltet ist, um zu ermöglichen, daß die bewegbare Polsterbaugruppe (19) zwischen der Erwachsenenbetriebsstellung und der Kinderbetriebsstellung bewegt werden kann, die bewegbare Polsterbaugruppe (19) Polstermaterial (19) enthält, das an der Rahmenstruktur (40) in einer Position angebracht ist, um (A) allgemein unter der Rahmenstruktur (40) angeordnet zu sein, wenn sich die bewegbare Polsterbaugruppe (19) in der Kinderbetriebsstellung befindet, und (B) allgemein vor der Rahmenstruktur (40) zwischen den Seitenpolstern (23, 24) angeordnet zu sein, wenn sich die bewegbare Polsterbaugruppe (19) in der Erwachsenenbetriebsstellung befindet, die Vielzahl von Polsterbaugruppen eine abnehmbare Polsterplattenbaugruppe (90') mit einem Sitzabschnitt (92') enthält, ein oder mehrere Hakenbefestigungsabschnitte (116b) an der bewegbaren Polsterbaugruppe (19) und zusammenwirkende Schlaufenverbindungen an dem Sitzabschnitt (92'), wobei der eine oder die mehreren Hakenbefestigungsabschnitte (116b) und die zusammenwirkenden Schlaufenverbindungen konstruiert und dazu ausgestaltet sind, um den Sitzabschnitt (92') der abnehmbaren Polsterplattenbaugruppe (90') lösbar an der bewegbaren Polsterbaugruppe (19) zu halten, um so zusammen mit dieser zwischen einer Stellung allgemein zwischen der Sitzrückenlehnenbaugruppe (14) und der Rahmenstruktur (40) der bewegbaren Polsterbaugruppe (19), wenn sich die bewegbare Polsterbaugruppe (19) in ihrer Erwachsenenbetriebsstellung befindet, und einer Stellung allgemein in darüberliegender Beziehung zu der Rahmenstruktur (40) der bewegbaren Polsterbaugruppe (19) bewegt zu werden, wenn sich die bewegbare Polsterbaugruppe (19) in ihrer Kinderbetriebsstellung befindet, und eine Kindersitzgurtbaugruppe enthält, die konstruiert und dazu ausgestaltet ist, um betätigbar zu sein, wenn sich die bewegbar Sitzbaugruppe in ihrer Kinderbetriebsstellung befindet, um manuell zwischen (A) einem gehaltenen Zustand, in dem es möglich ist, daß ein Kind durch diese in einer sitzenden Position auf dem gepolsterten Kindersitz gehalten wird, und (B) einem gelösten Zustand bewegt zu werden, in dem es möglich ist, (a) ein Kind in Vorbereitung auf das Anschnallen in eine sitzende Position auf dem gepolsterten Kindersitz zu bringen oder (b) ein Kind aus einer sitzenden Position auf dem gepolsterten Kindersitz herauszunehmen, nachdem es abgeschnallt ist, wobei die Kindersitzgurtbaugruppe, wenn sie sich bezüglich eines Kindes in einer sitzenden Position auf dem gepolsterten Kindersitz in dem gehaltenen Zustand befindet, zwischen den Beinen des Kindes nach unten zu einem Haltepunkt (60) verläuft, der durch die Rahmenstruktur (40) vorgesehen ist, und ein Paar Schultergurte (78, 80) hat, die von der Sitzrückenlehnenbaugruppe (14) über die Schultern von einem Kind in einer sitzenden Position auf dem gepolsterten Kindersitz verlaufen, wobei der Sitzabschnitt (92') der abnehmbaren Polsterplattenbaugruppe (90') eine obere Schicht des gepolsterten Kindersitzes bildet, wenn sich die bewegbare Polsterbaugruppe (19) in ihrer Kinderbetriebsstellung befindet, und konstruiert und dazu ausgestaltet ist, um zu ermöglichen, die Kindersitzgurtbaugruppe in den gehaltenen Zustand zu bewegen, in dem die Kindersitzgurtbaugruppe zwischen den Beinen von einem Kind in einer sitzenden Position auf dem Sitzabschnitt (92') der abnehmbaren Polsterplattenbaugruppe (90') nach unten zu dem Haltepunkt (60) verläuft, der durch die Rahmenstruktur (40) vorgesehen ist, wobei die abnehmbare Polsterplattenbaugruppe (90') aus einem ersten Stoffmaterial auf einer Außenseite davon, durch das die obere Schicht von dem gepolsterten Kindersitz gebildet ist, und aus einem zweiten Stoffmaterial auf einer gegenüberliegenden Seite der Außenseite konstruiert ist,
**dadurch gekennzeichnet**, daß die zusammenwirkenden Schlaufenverbindungen des Sitzabschnitts (92') durch einen Stoff oder durch ein anderes gewebtes Material vorgesehen sind, das den Sitzabschnitt (92') überdeckt, wobei zumindest der Bereich der hinteren Seite eine Flor-ähnliche Außenfläche hat, die dazu ausgestaltet ist, um mit dem einen oder den mehreren Hakenbefestigungsabschnitten (116b) der bewegbaren Polsterbaugruppe (19) einzugreifen.

## Revendications

1. Siège de véhicule intégré pour fournir de manière sélective un siège d'adulte en version siège d'adulte et un siège d'enfant en version siège d'enfant, ledit siège de véhicule comprenant un ensemble formant coussin de siège (12) construit et disposé afin d'être monté dans un véhicule dans une position permettant à un passager adulte du véhicule de s'asseoir dessus dans une position opérationnelle, un ensemble formant support de dossier de siège (14) monté par rapport audit ensemble formant coussin de siège (12) de manière à être disposé dans une relation opérationnelle fixe avec ce dernier, des coussins latéraux (23, 24) portés par ledit ensemble formant support de dossier de siège (14) dans des positions espacées d'une distance suffisante pour définir un espace pour installer un enfant entre lesdits coussins latéraux, espace de taille permettant de placer un enfant entre lesdits coussins latéraux, une pluralité d'ensembles formant coussins montés sur ledit ensemble formant support de dossier de siège comprenant un ensemble formant coussin mobile (19) construit et disposé par rapport audit ensemble formant support de dossier de siège (14) de façon à être déplacé entre (A) une position correspondant à la version adulte dans laquelle ladite pluralité d'ensembles formant coussins comprenant ledit ensemble formant coussin mobile (19) sont disposés dans l'espace situé entre les coussins latéraux (23, 24) et fournissent avec celui-ci un support de dossier rembourré pour adulte permettant de recevoir le dos d'un passager occupant le siège pour adulte assis sur l'ensemble formant coussin de siège et (B) une position correspondant à la version enfant dans laquelle ledit ensemble formant coussin mobile (19) s'étend depuis l'espace situé entre les coussins latéraux (23, 24) de façon à se situer au-dessus de l'ensemble formant coussin de siège (12) et ladite pluralité d'ensembles formant coussins, y compris ledit ensemble formant coussin mobile (19), fournit un siège d'enfant rembourré s'étendant depuis la partie inférieure de l'espace, de façon à se situer au-dessus de l'ensemble formant coussin de siège (12), un dossier de siège d'enfant rembourré s'étendant vers le haut depuis ledit siège d'enfant rembourré dans l'espace situé entre lesdits coussins latéraux (23, 24) et un appui-tête rembourré pour enfant étant disposé au-dessus du dossier de siège d'enfant rembourré, ledit ensemble formant coussin mobile (19) comprenant une structure de cadre (40) construite et disposée de manière à s'étendre généralement vers l'avant depuis une partie inférieure de l'ensemble formant support du dossier de siège (14) lorsque ledit ensemble formant coussin mobile (19) se trouve dans sa position correspondant à la version enfant, une liaison structurelle entre ladite structure de cadre (40) et ledit ensemble formant support de dossier de siège (14) construite et disposée de manière à permettre audit ensemble formant coussin mobile (19) d'être déplacé entre lesdites positions correspondant aux versions adulte et enfant, ledit ensemble formant coussin mobile (19) comprenant un matériau de rembourrage fixé à ladite structure de cadre (40) afin d'être placé (A) généralement sous ladite structure de cadre (40) lorsque ledit ensemble formant coussin mobile (19) se trouve dans la position correspondant à la version enfant et (B) généralement vers l'avant de ladite structure de cadre (40) entre lesdits coussins latéraux (23, 24) lorsque ledit ensemble formant coussin mobile (19) se trouve dans la position correspondant à la version adulte, ladite pluralité d'ensembles formant coussins comprenant un ensemble formant rembourrage de coussin amovible (90') ayant une section d'assise (92'), une ou plusieurs sections de dispositifs de fixation à crochets (116b) sur ledit ensemble formant coussin mobile (19) et des fixations à boucles coopérantes sur ladite section d'assise (92'), ladite ou lesdites sections de dispositifs de fixation à crochets (116b) et ladite fixation à boucles coopérantes étant construites et disposées de façon à maintenir, de manière amovible, ladite section d'assise (92') dudit ensemble formant rembourrage de coussin amovible (90') audit ensemble formant coussin mobile (19) de manière à pouvoir la déplacer avec celle(s)-ci entre une position généralement située entre l'ensemble formant support de dossier de siège (14) et la structure de cadre (40) dudit ensemble formant coussin mobile (19) lorsque ledit ensemble formant coussin mobile (19) se trouve dans sa position correspondant à la version adulte et une position, se situant généralement au-dessus de la structure de cadre (40) dudit ensemble formant coussin mobile (19) lorsque ledit ensemble formant coussin mobile (19) se trouve en position correspondant à la version enfant et un ensemble de ceinture de sécurité pour enfant construit et disposé de manière à être opérationnel lorsque ledit ensemble formant siège mobile se trouve en position correspondant à la version enfant de façon à pouvoir être déplacé manuellement entre (A) une condition de maintien permettant qu'un enfant qui se trouve en position assise sur ledit siège d'enfant rembourré soit maintenu et (B) une condition de relâchement permettant (a) l'installation d'un enfant en position assise sur ledit siège d'enfant rembourré avant l'application du maintien ou (b) la sortie d'un enfant en position assise sur ledit siège d'enfant rembourré après l'application du maintien, ledit ensemble de ceinture de sécurité pour enfant, dans ladite condition de maintien par rapport à un enfant se trouvant en position assise sur ledit siège d'enfant rembourré, s'étendant vers le bas entre les jambes de l'enfant jusqu'a un point de retenue (60) assuré par ladite structure de cadre (40) et incluant une paire de ceintures thoraciques supérieures (78, 80) s'étendant depuis l'ensemble formant support de dossier de siège (14) par-dessus les épaules d'un enfant en position assise sur ledit siège d'enfant rembourré, ladite section d' assise (92') dudit ensemble formant rembourrage de coussin amovible (90') constituant la couche supérieure dudit siège d'enfant rembourré lorsque ledit ensemble formant coussin mobile (19) se trouve en position correspondant à la version enfant et étant construite et disposée pour permettre audit ensemble de ceinture de sécurité pour enfant d'être déplacé dans ladite condition de maintien, dans lequel l'ensemble de ceinture de sécurité pour enfant s'étend vers le bas entre les jambes d'un enfant se trouvant en position assise sur la section d'assise (92') dudit ensemble formant rembourrage de coussin amovible (90') jusqu'au point de retenue (60) fourni par ladite structure de cadre (40), ledit ensemble formant rembourrage de coussin amovible (90') étant fabriqué en un premier matériau en tissu sur son côté extérieur définissant ainsi la couche supérieure du siège d'enfant rembourré et étant fabriqué en un second matériau en tissu sur un côté opposé audit côté extérieur,
caractérisé en ce que lesdites fixations à boucles coopérantes comprennent le second matériau en tissu lui-même, ledit second matériau en tissu ayant une surface externe semblable à du velours s'étendant sensiblement sur tout le côté opposé de ladite section d'assise (92') fournissant des boucles pouvant être accrochées, de manière détachable, par une ou plusieurs sections de dispositifs de fixation à crochets (116b).

2. Siège de véhicule selon la revendication 1, caractérisé en ce que lesdites fixations à boucles coopérantes sont fournies sous forme d'une partie d'un seul tenant du deuxième matériau en tissu lui-même, ledit deuxième matériau en tissu étant exempt de toute section séparée fixée dessus susceptible de fournir des fixations à boucles.

3. Siège de véhicule selon l'une des revendications 1 ou 2 caractérisé en ce que l'ensemble formant rembourrage de coussin amovible (90') du siège de véhicule comprend une section de dossier (94') reliée, par une charnière, à ladite section d'assise (92') le long d'une ligne de pliage, une ou plusieurs sections de fixation à crochets (140b) disposées sur ledit support de dossier du siège et des fixations à boucles coopérantes sur ladite section de dossier (94') et en ce que lesdites fixations à boucles coopérantes disposées sur ladite section de dossier (94') comprenant le deuxième matériau en tissu ayant une surface extérieure semblable à du velours s'étendant sensiblement sur tout le côté opposé de ladite section de dossier fournissent des boucles pouvant s'accrocher, de manière détachable, à une ou plusieurs sections de dispositifs de fixation à crochets (140b) fixées audit ensemble formant support de dossier du siège.

4. Siège de véhicule selon l'une des revendications 1, 2 ou 3, caractérisé en ce que lesdites boucles occupent une zone de ladite surface extérieure semblable à du velours qui est sensiblement plus grande que la zone occupée par lesdites sections de fixation à crochets.

5. Siège de véhicule selon l'une des revendications 1, 2, 3 ou 4, caractérisé en ce que ladite section d'assise (92') et ladite section de dossier (94') sont reliées, par une charnière, le long d'une partie de charnière d'un seul tenant (96') définissant généralement ladite ligne de pliage, ladite partie de charnière (96') ayant une épaisseur moyenne inférieure à l'épaisseur moyenne de ladite section d'assise (92') et de ladite section de dossier (94').

6. Siège de véhicule selon l'une quelconque des revendications précédentes, caractérisé en ce que ledit premier matériau en tissu et ledit deuxième matériau en tissu ont une forme périphérique sensiblement identique.

7. Siège de véhicule selon l'une quelconque des revendications précédentes, caractérisé en ce que ledit premier ensemble formant coussin mobile dispose, comme point de retenue, d'un point d'ancrage rigide (60) destiné à l'ensemble de ceinture de sécurité pour enfant, situé entre les jambes d'un enfant assis sur le siège d'enfant rembourré, ladite pluralité d'ensembles formant coussins comprenant un ensemble formant coussin sous la forme d'un élément de rembourrage (20) connecté audit ensemble formant coussin amovible de sorte qu'ils puissent être déplacés ensemble avec ledit ensemble formant coussin mobile, ledit élément de rembourrage étant construit et disposé par rapport audit ensemble formant coussin mobile de manière à (1) s'étendre au-dessus dudit ensemble formant coussin mobile entre lesdits coussins latéraux pour fournir une partie d'appui du dos d'un adulte lorsque ledit ensemble formant coussin mobile se trouve dans la position correspondant à la version adulte et (2) s'étendre vers l'avant depuis ledit ensemble formant coussin mobile de façon à se situer au-dessus dudit ensemble formant coussin de siège lorsque ledit ensemble formant coussin mobile se trouve dans ladite position correspondant à la version enfant pour fournir un soutien pour les jambes d'un petit enfant assis sur ledit siège d'enfant rembourré, ledit élément de rembourrage (20) étant relié audit ensemble formant coussin mobile par un ensemble de fermeture à glissière séparable construit et disposé de manière à être déplacé entre une position de fixation où ledit élément de rembourrage est relié audit ensemble formant coussin mobile et une position de séparation permettant audit élément de rembourrage d'être séparé, de manière sélective, dudit ensemble formant coussin mobile.

8. Siège de véhicule selon la revendication 7, caractérisé en ce que ladite fermeture à glissière est une fermeture-éclair séparable (25).

9. Siège de véhicule selon la revendication 7, caractérisé en ce que ladite fermeture à glissière séparable comprend une paire d'éléments coopérants fixés, respectivement, audit ensemble formant coussin mobile et audit élément de rembourrage (20), une première paire d'éléments coopérants comprenant un élément creux généralement en forme de U en section transversale, un deuxième élément de ladite paire d'éléments coopérants comportant une saillie longitudinale bordée construite et disposée pour s'engager en glissant et de manière détachable dans la forme en U dudit élément creux.

10. Siège de véhicule selon la revendication 7, caractérisé en ce que l'ensemble formant rembourrage de coussin amovible (90') du siège de véhicule comprend une section de dossier (94') reliée, par une charnière, à ladite section d'assise le long d'une ligne de pliage, une ou plusieurs sections de fixation à crochets sur ledit ensemble formant support de dossier du siège (14) et une ou plusieurs fixations à boucles coopérantes sur ladite section de dossier (94') et par des fixations à boucles coopérantes sur ladite section de dossier (94) comprenant le deuxième matériau en tissu ayant une surface extérieure semblable à du velours s 'étendant sensiblement sur tout le côté opposé de ladite section de dossier (94') afin de pouvoir s'accrocher, de manière détachable, à la (ou aux) section(s) de dispositifs de fixation à crochets fixée(s) audit ensemble formant support de dossier du siège.

11. Siège de véhicule selon la revendication 7, caractérisé en ce que ledit ensemble formant support de dossier du siège (14) comprend une structure de support du dossier du siège et un panneau arrière rigide (26) de taille appropriée pour s'emboîter dans l'espace situé entre lesdits coussins latéraux, ledit panneau rigide étant connecté avec ladite structure de soutien du dossier du siège vers l'avant de celui-ci.

12. Siège de véhicule selon la revendication 11, caractérisé en ce que ledit panneau arrière rigide (26) comprend un certain nombre d'encoches construites et disposées pour permettre à la paire de ceintures thoraciques supérieures (78, 80) dudit ensemble de ceinture de sécurité pour enfant d'être placée, de manière pratique, dans une pluralité de positions verticalement espacées par rapport audit dossier du siège d'enfant afin de recevoir, de manière sélective, un enfant relativement petit ou un enfant relativement grand en saisissant manuellement les ceintures thoraciques supérieures s'étendant vers l'avant dudit dossier du siège d'enfant rembourré et en les déplaçant, de manière sélective, dans une position de ladite pluralité de positions verticalement espacées, ladite pluralité d'encoches comprenant deux paires, espacées horizontalement et généralement alignées horizontalement, d'encoches de retenue destinées à recevoir les ceintures espacées verticalement (82, 158 et 83, 160) formées dans ledit panneau arrière rigide (26) et une encoche de transfert (142, 144) s'étendant entre les encoches de retenue de chaque paire, de manière à définir une partie en porte-à-faux dans ledit panneau arrière rigide entre les deux encoches de retenue associées, ladite structure de support du dossier du siège comprenant un support rigide connecté directement sur chaque partie en porte-à-faux, chacun desdits supports étant construit et disposé pour fournir un support de ladite structure de support du dossier du siège directement à la partie en porte-à-faux connectée tout en permettant que la ceinture thoracique supérieure associée soit sélectivement déplacée à l'intérieur de l'encoche de transfert associée (142, 144) entre les deux encoches de retenue associées.

13. Siège de véhicule selon la revendication 12, caractérisé en ce qu'une encoche de retenue supérieure de chaque paire d'encoches de retenue a l'encoche de transfert à laquelle elle est associée qui s'étend dans une relation de communication vers le haut depuis celle-ci entre ses extrémités, latéralement entre l'une de ses extrémités et ensuite généralement vers le bas au-delà de ladite encoche de retenue supérieure dans une relation espacée latéralement avec ladite encoche de retenue supérieure en communication avec l'encoche de retenue inférieure de la paire.

14. Siège de véhicule selon la revendication 13, caractérisé en ce que ledit certain nombre d'encoches comprend également une encoche d'inversion associée à chaque encoche de transfert, chaque encoche d'inversion ayant une extrémité d'entrée fermée et une extrémité opposée communiquant avec l'encoche de transfert associée et étant d'une longueur suffisante pour permettre à la ceinture associée d'être déplacée dans celle-ci à travers ladite extrémité opposée alors qu'un bord de ladite ceinture passe en premier et d'être sortie vers l'extérieur de celle-ci à travers ladite extrémité opposée alors que le bord opposé de ladite ceinture passe en premier de manière à permettre à ladite ceinture d'être déplacée dans chaque encoche de retenue de la paire associée d'encoches de retenue alors que ses bords sont orientés de manière identique par rapport à chaque encoche de retenue.

15. Siège de véhicule selon la revendication 14, caractérisé en ce que ladite pluralité d'ensembles formant coussins comprennent un ensemble formant coussin d'appui pour la tête fixé sur la partie supérieure dudit panneau arrière rigide (26) entre lesdits coussins latéraux, ledit ensemble formant coussin d'appui pour la tête étant construit et disposé afin d'assurer un support rembourré à la tête de l'enfant lorsque ledit ensemble formant coussin mobile se trouve dans la position correspondant à la version enfant et en ce que l'amélioration prévoit également que ledit ensemble formant coussin d'appui pour la tête peut être connecté, solidement et de manière détachable au niveau de sa partie inférieure, à la partie supérieure du panneau arrière rigide au moyen de dispositifs de fixation détachables portés par ledit ensemble formant coussin d'appui pour la tête et être connecté, de manière détachable, audit panneau arrière rigide, une partie supérieure dudit coussin d'appui pour la tête ayant un collier de serrage en forme de C connecté à celle-ci et une traverse faisant partie de la structure de support du dossier du siège.

16. Siège de véhicule selon la revendication 11, caractérisé en ce que ledit panneau arrière rigide (26) comprend un certain nombre d'encoches construites et disposées pour permettre à la paire de ceintures thoraciques supérieures (78, 60) dudit ensemble de ceinture de sécurité pour enfant d'être placée, de manière pratique, dans plusieurs positions verticalement espacées par rapport audit dossier du siège d'enfant afin de recevoir, de manière sélective, un enfant relativement petit ou un enfant relativement grand en saisissant manuellement les ceintures thoraciques supérieures s'étendant vers l'avant dudit dossier du siège d'enfant rembourré et en les déplaçant, de manière sélective, dans une position de ladite pluralité de positions verticalement espacées, ledit nombre d'encoches comprenant deux paires, espacées horizontalement et généralement alignées horizontalement, d'encoches de retenue destinées à recevoir les ceintures, encoches espacées verticalement formées dans ledit panneau arrière rigide et une encoche de transfert associée à chaque paire d'encoches de retenue, une encoche de retenue supérieure de chaque paire d'encoches de retenue ayant une extrémité de l'encoche de transfert associée à celle-ci disposée dans une relation de communication avec celle-ci entre ses extrémités, chaque encoche de transfert s'étendant vers le haut depuis ladite première extrémité de celle-ci et latéralement au-delà de l'une des extrémités de l'encoche de retenue supérieure associée puis généralement vers le bas au-delà de l'encoche de retenue supérieure associée dans une relation espacée latéralement par rapport à l'encoche de retenue supérieure associée dans une relation de communication à son extrémité opposée avec une encoche de retenue inférieure de la paire associée d'encoches de retenue.

17. Siège de véhicule selon la revendication 16, caractérisé en ce que lesdites encoches comprennent également une encoche d'inversion associée à chaque encoche de transfert, chaque encoche d'inversion ayant une extrémité d'entrée fermée et une extrémité opposée communiquant avec l'encoche de transfert associée et étant d'une longueur suffisante pour permettre à la ceinture associée d'être déplacée dans celle-ci à travers ladite extrémité opposée alors qu'un bord de ladite ceinture passe en premier et d'être sortie de ladite encoche à travers ladite extrémité opposée alors que le bord opposé de ladite ceinture passe en premier de manière à permettre à ladite ceinture d'être déplacée dans chaque encoche de retenue de la paire associée d'encoches de retenue alors que ses bords sont orientés de manière identique par rapport à chaque encoche de retenue.

18. Siège de véhicule selon la revendication 11, caractérisé en ce que ladite pluralité d'ensembles formant coussins comprend un ensemble formant coussin d'appui pour la tête fixé sur une partie supérieure dudit panneau arrière rigide (26) entre lesdits coussins latéraux (23, 24), ledit ensemble formant coussin d'appui pour la tête étant construit et disposé afin d'assurer un support rembourré à la tête de l'enfant lorsque ledit ensemble formant coussin mobile se trouve dans la position correspondant à la version enfant de celui-ci et en ce que l'amélioration prévoit également que ledit ensemble formant coussin d'appui pour la tête peut être relié, de manière fixe ou détachable au niveau de sa partie inférieure, à la partie supérieure du panneau arrière rigide au moyen de dispositifs de fixation détachables portés par ledit ensemble formant coussin d'appui pour la tête et être relié, de manière détachable, audit panneau arrière rigide, une partie supérieure dudit coussin d'appui pour la tête étant connectée à un collier de serrage en forme de C et une traverse faisant partie de la structure de support du dossier du siège.

19. Siège de véhicule selon l'une quelconque des revendications 1 & 6, caractérisé en ce que ledit ensemble formant support de dossier de siège (14) comprend une structure de support du dossier du siège (30) et un panneau arrière rigide (26) de taille appropriée pour s'emboîter dans l'espace situé entre lesdits coussins latéraux, ledit panneau arrière rigide étant connecté avec ladite structure de support du dossier du siège vers l'avant de celui-ci, ledit panneau arrière rigide comprenant un certain nombre d'encoches construites et disposées pour permettre à la paire de ceintures thoraciques supérieures (78, 80) dudit ensemble de ceinture de sécurité pour enfant d'être placée, de manière pratique, dans une pluralité de positions verticalement espacées par rapport audit dossier du siège d'enfant afin d'accueillir, de manière sélective, un enfant relativement petit ou un enfant relativement grand en saisissant manuellement les ceintures thoraciques supérieures s'étendant vers l'avant dudit dossier du siège d'enfant rembourré et en les déplaçant, de manière sélective, dans une position de ladite pluralité de positions verticalement espacées, ladite pluralité d'encoches comprenant deux paires, espacées horizontalement et généralement alignées horizontalement, d'encoches de retenue destinées à recevoir les ceintures, espacées verticalement, et formées dans ledit panneau arrière rigide et une encoche de transfert s'étendant entre les encoches de retenue de chaque paire de manière à définir une partie en porte-à-faux dans ledit panneau arrière rigide entre les deux encoches de retenue associées, ladite structure de support du dossier du siège comprenant un support rigide relié directement à chaque partie en porte-à-faux, chacun desdits supports étant construit et disposé pour fournir un support de ladite structure de support du dossier du siège directement à la partie en porte-à-faux reliée de celui-ci tout en permettant à la ceinture thoracique supérieure associée de se déplacer sélectivement à l'intérieur de l'encoche de transfert associée entre les deux encoches de retenue associées.

20. Siège de véhicule selon la revendication 19, caractérisé en ce qu'une encoche de retenue supérieure de chaque paire d'encoches de retenue est associée à une encoche de transfert qui s'étend dans une relation de communication avec celle-ci vers le haut depuis celle-ci entre ses extrémités et latéralement entre l'une de ses extrémités et ensuite généralement vers le bas au-delà de ladite encoche de retenue supérieure dans une relation espacée latéralement avec ladite encoche de retenue supérieure en communication avec une encoche de retenue inférieure de la paire.

21. Siège de véhicule selon la revendication 20, caractérisé en ce que lesdites encoches comprennent également une encoche d'inversion associée à chaque encoche de transfert, chaque encoche d'inversion ayant une extrémité d'entrée fermée et une extrémité opposée communiquant avec l'encoche de transfert associée et ayant une longueur suffisante pour permettre à la ceinture associée d'être déplacée dans celle-ci à travers ladite extrémité opposée alors qu'un bord de ladite ceinture passe en premier et d'être sortie de ladite encoche à travers ladite extrémité opposée alors que le bord opposé de ladite ceinture passe en premier de manière à permettre à ladite ceinture d'être déplacée dans chaque encoche de retenue de la paire associée d'encoches de retenue alors que ses bords sont orientés de manière identique par rapport à chaque encoche de retenue.

22. Siège de véhicule selon la revendication 19, dans lequel ladite pluralité d'ensembles formant coussins comprend un ensemble formant coussin d'appui pour la tête fixé sur une partie supérieure dudit panneau arrière rigide entre lesdits coussins latéraux, ledit ensemble formant coussin d'appui pour la tête étant construit et disposé pour fournir ledit support rembourré de la tête de l'enfant lorsque ledit ensemble formant coussin mobile se trouve dans la position correspondant à la version enfant et dans lequel l'amélioration comprend en outre le fait que ledit ensemble formant coussin d'appui pour la tête est fixé, solidement et de manière détachable au niveau de sa partie inférieure, à la partie supérieure du panneau arrière rigide au moyen de dispositifs de fixation détachables portés par ledit ensemble formant coussin d'appui pour la tête et est fixé, de manière détachable, audit panneau arrière rigide, une partie supérieure dudit coussin d'appui pour la tête étant connecté à un collier de serrage en forme de C et une traverse faisant partie de la structure de support du dossier du siège.

23. Siège de véhicule selon l'une quelconque des revendications 1 à 6, caractérisé en ce que ledit premier ensemble formant coussin mobile fournit, comme point de retenue, un point d'ancrage rigide destiné à l'ensemble de ceinture de sécurité pour enfant et situé entre les jambes d'un enfant assis sur ledit siège d'enfant rembourré, ledit ensemble formant support de dossier de siège comprenant une structure de support de dossier de siège et un panneau arrière rigide de taille appropriée pour s'emboîter dans l'espace situé entre lesdits coussins latéraux, ledit panneau arrière rigide étant relié à ladite structure de support de dossier de siège à l'avant de celle-ci, ledit panneau arrière rigide comprenant un certain nombre d'encoches ménagées et disposées pour permettre à la paire de ceintures thoraciques supérieures dudit ensemble de ceinture de sécurité pour enfant d'être placée, de manière pratique, dans une pluralité de positions verticalement espacées par rapport audit dossier du siège d'enfant afin de recevoir, de manière sélective, un enfant relativement petit ou un enfant relativement grand en saisissant manuellement les ceintures thoraciques supérieures s'étendant vers l'avant dudit dossier du siège d'enfant rembourré et en les déplaçant, de manière sélective, dans une position de ladite pluralité de positions verticalement espacées, lesdites encoches comprenant deux paires, espacées horizontalement et généralement alignées horizontalement, d'encoches de retenue destinées à recevoir les ceintures de retenue espacées verticalement formées dans ledit panneau arrière rigide et une encoche de transfert associée à chaque paire d'encoches de retenue, une encoche de retenue supérieure de chaque paire d'encoches de retenue ayant une extrémité de l'encoche de transfert qui y est associée disposée en relation de communication avec celle-ci entre ses extrémités, chaque encoche de transfert s'étendant vers le haut depuis ladite première extrémité de celle-ci et latéralement au-delà de l'une des extrémités de l'encoche de retenue supérieure associée puis généralement vers le bas au-delà de l'encoche de retenue supérieure associée dans une relation espacée latéralement par rapport à l'encoche de retenue supérieure associée en communication à son extrémité opposée avec une encoche de retenue inférieure de la paire associée d'encoches de retenue.

24. Siège de véhicule selon la revendication 23, caractérisé en ce que lesdites encoches comprennent également une encoche d'inversion associée à chaque encoche de transfert, chaque encoche d'inversion ayant une extrémité d'entrée fermée et une extrémité opposée communiquant avec l'encoche de transfert associée et ayant une longueur suffisante pour permettre à la ceinture associée d'être déplacée dans celle-ci à travers ladite extrémité opposée alors qu'un bord de ladite ceinture passe en premier et d'être sortie de ladite encoche à travers ladite extrémité opposée alors que le bord opposé de ladite ceinture passe en premier de manière à permettre à ladite ceinture d'être déplacée dans chaque encoche de retenue de la paire associée d'encoches de retenue alors que ses bords sont orientés de manière identique par rapport à chaque encoche de retenue.

25. Siège de véhicule selon l'une quelconque des revendications 1 à 6, caractérisé en ce que ladite pluralité d'ensembles formant coussins comprend un ensemble formant coussin d'appui pour la tête fixé sur une partie supérieure dudit panneau arrière rigide entre lesdits coussins latéraux, ledit ensemble formant coussin d'appui pour la tête étant construit et disposé de façon à fournir ledit support rembourré pour la tête de l'enfant lorsque ledit ensemble formant coussin mobile se trouve dans sa position correspondant à la version enfant, ledit ensemble formant coussin d'appui pour la tête étant relié, solidement et de manière détachable au niveau de sa partie inférieure, à la partie supérieure du panneau arrière rigide au moyen de dispositifs de fixation détachables portés par ledit ensemble formant coussin d'appui pour la tête et relié, de manière détachable, audit panneau arrière rigide, une partie supérieure dudit coussin d'appui pour la tête étant connecté à un collier de serrage en forme de C et une traverse faisant partie de la structure de support du dossier du siège.

26. Siège de véhicule selon la revendication 25, caractérisé en ce que ledit panneau arrière rigide comprend un certain nombre d'encoches construites et disposées pour permettre à la paire de ceintures thoraciques supérieures dudit ensemble de ceinture de sécurité pour enfant d'être placée, de manière pratique, dans une pluralité de positions verticalement espacées par rapport audit dossier du siège d'enfant afin de recevoir, de manière sélective, un enfant relativement petit ou un enfant relativement grand en saisissant manuellement les ceintures thoraciques supérieures s'étendant vers l'avant du dossier du siège d'enfant rembourré et en les déplaçant, de manière sélective, dans une position de ladite pluralité de positions verticalement espacées, ladite pluralité d'encoches comprenant deux paires, espacées horizontalement et généralement alignées horizontalement, d'encoches de retenue destinées à recevoir les ceintures espacées verticalement formées dans ledit panneau arrière rigide et une encoche de transfert associée à chaque paire d'encoches de retenue, une encoche de retenue supérieure de chaque paire d'encoches de retenue a l'encoche de transfert à laquelle elle est associée s'étendant dans une relation de communication vers le haut entre ses extrémités et latéralement entre l'une de ses extrémités et ensuite généralement vers le bas au-delà de ladite encoche de retenue supérieure dans une relation espacée latéralement avec ladite encoche de retenue supérieure en communication avec une encoche de retenue inférieure de la paire, une partie intérieure dudit coussin d'appui pour la tête étant fixée, de manière détachable, à la partie supérieure dudit panneau arrière rigide en un point situé directement au-dessus des encoches de retenue supérieures dans une position permettant de couvrir les parties des encoches de transfert associées s'étendant au-dessus.

27. Siège de véhicule intégré pour fournir de manière sélective un siège d'adulte en version siège pour adulte et un siège d'enfant en version siège pour enfant, ledit siège de véhicule comprenant un ensemble formant coussin de siège (12) construit et disposé afin d'être monté dans un véhicule dans une position permettant à un passager adulte du véhicule de s'asseoir dessus dans une position opérationnelle, un ensemble formant support de dossier de siège (14) monté par rapport audit ensemble formant coussin de siège (12) de manière à être disposé dans une relation opérationnelle fixe avec ce dernier, des coussins latéraux (23, 24) portés par ledit ensemble formant support de dossier de siège (14) dans des positions espacées d'une distance suffisante pour définir un espace pour recevoir un enfant entre lesdits coussins latéraux ayant une taille permettant de placer un enfant entre lesdits coussins latéraux, une pluralité d'ensembles formant coussins montés sur ledit ensemble formant support de dossier de siège comprenant un ensemble formant coussin mobile (19) construit et disposé par rapport audit ensemble formant support de dossier de siège (14) pour être déplacé entre (A) une position correspondant à la version adulte dans laquelle ladite pluralité d'ensembles formant coussins y compris ledit ensemble formant coussin mobile (19) sont disposés dans l'espace situé entre les coussins latéraux (23, 24) et constituent avec celui-ci un support de dossier rembourré pour adulte permettant l'appui du dos d'un passager occupant le siège d'adulte assis sur l'ensemble formant coussin de siège et (B) une position correspondant à la version enfant dans laquelle ledit ensemble formant coussin mobile (19) s'étend depuis l'espace situé entre les coussins latéraux (23, 24) en se situant au-dessus de l'ensemble formant coussin de siège (12) et ladite pluralité d'ensembles formant coussins, comprenant ledit ensemble formant coussin mobile (19), fournit un siège d'enfant rembourré s'étendant depuis la partie inférieure de l'espace, en se situant au-dessus de l'ensemble formant coussin de siège (12), un dossier de siège d'enfant rembourré s'étendant vers le haut depuis ledit siège d'enfant rembourré dans l'espace situé entre lesdits coussins latéraux (23, 24) et un appui-tête rembourré d'enfant au-dessus du dossier de siège d'enfant rembourré, ledit ensemble formant coussin mobile (19) comprenant une structure de cadre (40) construite et disposée de manière à s'étendre généralement vers l'avant depuis une partie inférieure de l'ensemble formant support du dossier de siège (14) lorsque ledit ensemble formant coussin mobile (19) se trouve dans la position correspondant à la version enfant, une fixation structurelle entre ladite structure de cadre (40) et ledit ensemble formant support de dossier de siège (14) construite et disposée de manière à permettre audit ensemble formant coussin mobile (19) d'être déplacé entre lesdites positions de version adulte et de version enfant, ledit ensemble formant coussin mobile (19) comprenant un matériau de rembourrage fixé à ladite structure de cadre (40) afin d'être placé (A) généralement sous ladite structure de cadre (40) lorsque ledit ensemble formant coussin mobile (19) se trouve dans la position correspondant à la version enfant et (B) généralement vers l'avant de ladite structure de cadre (40) entre lesdits coussins latéraux (23, 24) lorsque ledit ensemble formant coussin mobile (19) se trouve dans la position correspondant à la version adulte, ladite pluralité d'ensembles formant coussins comprenant un ensemble formant rembourrage de coussin amovible (90') ayant une section d'assise (92'), une ou plusieurs sections de dispositifs de fixation à crochets (116b) sur ledit ensemble formant coussin mobile (19) et des fixations à boucles coopérantes sur ladite section d'assise (92'), ladite ou lesdites sections de dispositifs de fixation à crochets (116b) et ladite fixation à boucles coopérantes étant construites et disposées pour maintenir, de manière amovible, ladite section d'assise (92') dudit ensemble formant rembourrage de coussin amovible (90') avec ledit ensemble formant coussin mobile (19) de manière à pouvoir être déplacé avec celui-ci entre une position généralement située entre l'ensemble formant support de dossier de siège (14) et la structure de cadre (40) dudit ensemble formant coussin mobile (19) lorsque ledit ensemble formant coussin mobile (19) se trouve dans la position correspondant à la version adulte et une position, généralement se situant au-dessus de la structure de cadre (40) dudit ensemble formant coussin mobile (19) lorsque ledit ensemble formant coussin mobile (19) se trouve en position de version enfant et un ensemble de ceinture de sécurité pour enfant construit et disposé de manière à être opérationnel lorsque ledit ensemble formant siège mobile se trouve en position de version enfant pour pouvoir être manuellement déplacé entre (A) une condition de retenue permettant qu'un enfant qui se trouve en position assise sur ledit siège d'enfant rembourré soit maintenu et (B) une condition de relâchement permettant (a) l'installation d'un enfant en position assise sur ledit siège d'enfant rembourré avant l'application du maintien ou (b) la sortie d'un enfant en position assise sur ledit siège d'enfant rembourré après l'application du maintien, ledit ensemble de ceinture de sécurité pour enfant, dans ladite condition de maintien par rapport à un enfant se trouvant en position assise sur ledit siège d'enfant rembourré, s'étendant vers le bas entre les jambes de l'enfant jusqu'à un point de retenue (60) assuré par ladite structure de cadre (40) et incluant une paire de ceintures thoraciques supérieures (78, 80) s'étendant depuis l'ensemble formant support de dossier de siège (14) par-dessus les épaules d'un enfant en position assise sur ledit siège d'enfant rembourré, ladite section d'assise (92') dudit ensemble formant rembourrage de coussin amovible (90') constituant la couche supérieure dudit siège d'enfant rembourré lorsque ledit ensemble formant coussin mobile (19) se trouve en position de version enfant et étant construite et disposée pour permettre audit ensemble de ceinture de sécurité pour enfant d'être déplacé dans ladite condition de maintien, dans lequel l'ensemble de ceinture de sécurité pour enfant s'étend vers le bas entre les jambes d'un enfant se trouvant en position assise sur la section d'assise (92') dudit ensemble formant rembourrage de coussin amovible (90') jusqu'au point de retenue (60) fourni par ladite structure de cadre (40), ledit ensemble formant rembourrage de coussin amovible (90') étant fabriqué en un premier matériau en tissu sur son côté extérieur définissant ainsi la couche supérieure du siège d'enfant rembourré et étant fabriqué en un second matériau en tissu sur un côté opposé audit côté extérieur,
caractérisé en ce que lesdites fixations à boucles coopérantes de ladite section d'assise (92') sont fournies par un matériau en tissu ou en toile recouvrant la section d'assise (92') dans laquelle au moins la partie latérale arrière a une surface externe semblable à du velours adaptée pour s'accrocher à l'une desdites sections de fixation à crochets (116b) dudit ensemble formant coussin mobile (19).
